# EUROPEAN PATENT APPLICATION

(11) **EP 4 804 596 A1**
(43) Date of publication of application: **09.09.2026**
(21) Application number: 24896309.2
(22) Date of filing: 18.11.2024
(51) Int. Cl.: H04W 24/02, H04W 28/24, H04W 4/24, H04W 76/10

(54) **COMMUNICATION METHOD, COMMUNICATION APPARATUS, AND COMMUNICATION SYSTEM**

(30) Priority: 27.11.2023 CN 202311608148
(71) Applicant: Huawei Technologies Co., Ltd., Shenzhen, Guangdong 518129 (CN)
(72) Inventor: YING, Jiangwei, Shenzhen, Guangdong 518129 (CN); ZHU, Fangyuan, Shenzhen, Guangdong 518129 (CN)
(74) Representative: Maiwald GmbH
(86) International application number: PCT/CN2024/132631
(87) International publication number: WO 2025/113218

(57) **Abstract**

This application provides a communication method, a communication apparatus, and a communication system. The method includes: receiving a first request, where the first request includes a requested QoS parameter; obtaining a sensing map corresponding to a first area in which a terminal device is located, where the sensing map is state information that is of an object in the first area and that is obtained through sensing; and determining, based on the sensing map and the requested QoS parameter, whether to accept the requested QoS parameter. In this solution, information in a sensing dimension is used as a consideration factor for communication control (for example, QoS) of the terminal device, that is, whether to accept the requested QoS parameter is determined based on the sensing map, so that communication QoS of a service can be optimized, thereby improving service experience in communication.

## Description

### CROSS-REFERENCE TO RELATED APPLICATIONS

This application claims priority to Chinese Patent Application No. 202311608148.9, filed with the China National Intellectual Property Administration on November 27, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

Quality of service (quality of service, QoS) is a capability of a network to use various basic technologies to provide a better service for specified network communication, is a security mechanism of the network, and is a technology used to resolve problems such as network latency and network congestion. QoS guarantee is of great importance for networks with limited capacity, especially for streaming multimedia services because these applications often require a fixed transmission rate and are sensitive to latency.

How to optimize communication QoS of a service to improve service experience in communication is a problem that needs continuous attention.

### SUMMARY

This application provides a communication method, a communication apparatus, and a communication system, to optimize communication QoS of a service, thereby improving service experience in communication.

According to a first aspect, an embodiment of this application provides a communication method. The method may be performed by a policy control network element, a data analytics network element, a chip used in the policy control network element, or a chip used in the data analytics network element. The method includes: receiving a first request, where the first request includes a requested QoS parameter; obtaining a sensing map corresponding to a first area in which a terminal device is located, where the sensing map is state information that is of an object in the first area and that is obtained through sensing; and determining, based on the sensing map and the requested QoS parameter, whether to accept the requested QoS parameter.

In the foregoing solution, information in a sensing dimension is used as a consideration factor for communication control (for example, QoS) of the terminal device, that is, whether to accept the requested QoS parameter is determined based on the sensing map, so that communication QoS of a service can be optimized, thereby improving service experience in communication.

In a possible implementation method, the receiving the first request, where the first request includes the requested QoS parameter may be replaced with: receiving a first request, where the first request includes indication information indicating a requested QoS parameter; and obtaining the requested QoS parameter based on the indication information.

In a possible implementation method, the determining, based on the sensing map and the requested QoS parameter, whether to accept the requested QoS parameter includes: determining an accepted QoS parameter based on the sensing map and the requested QoS parameter, where the accepted QoS parameter is the same as the requested QoS parameter, or a QoS level corresponding to the accepted QoS parameter is lower than a QoS level corresponding to the requested QoS parameter.

In the foregoing solution, the accepted QoS parameter may be obtained based on the sensing map and the requested QoS parameter, so that the accepted QoS parameter is used for QoS communication, appropriateness of a provided QoS parameter is ensured, and communication QoS of a service can be optimized, thereby improving service experience in communication.

In a possible implementation method, the determining, based on the sensing map and the requested QoS parameter, whether to accept the requested QoS parameter includes: if determining, based on the sensing map, that duration in which the requested QoS parameter cannot be met is greater than first duration, determining an accepted QoS parameter, where a QoS level corresponding to the accepted QoS parameter is lower than a QoS level corresponding to the requested QoS parameter.

In the foregoing solution, the accepted QoS parameter may be obtained based on the sensing map and the requested QoS parameter, so that the accepted QoS parameter is used for QoS communication, appropriateness of a provided QoS parameter is ensured, and communication QoS of a service can be optimized, thereby improving service experience in communication.

In a possible implementation method, the determining, based on the sensing map and the requested QoS parameter, whether to accept the requested QoS parameter includes: if determining, based on the sensing map, that duration in which the requested QoS parameter cannot be met is greater than first duration, rejecting the requested QoS parameter.

In the foregoing solution, the requested QoS parameter may be rejected based on the sensing map and the requested QoS parameter, to ensure that an inappropriate QoS parameter is not used, so that communication QoS of a service can be optimized, thereby improving service experience in communication.

In a possible implementation method, the determining, based on the sensing map and the requested QoS parameter, whether to accept the requested QoS parameter includes: if determining, based on the sensing map, that duration in which the requested QoS parameter can be met is greater than second duration, determining an accepted QoS parameter, where the accepted QoS parameter is the same as the requested QoS parameter.

In the foregoing solution, the accepted QoS parameter may be obtained based on the sensing map and the requested QoS parameter, so that the accepted QoS parameter is used for QoS communication, appropriateness of a provided QoS parameter is ensured, and communication QoS of a service can be optimized, thereby improving service experience in communication.

In a possible implementation method, the determining, based on the sensing map and the requested QoS parameter, whether to accept the requested QoS parameter includes: determining a predicted QoS parameter based on the sensing map; and determining, based on the predicted QoS parameter and the requested QoS parameter, whether to accept the requested QoS parameter.

In a possible implementation method, the determining the predicted QoS parameter based on the sensing map includes: determining, based on the sensing map, a predicted QoS parameter corresponding to the first area; determining, based on the sensing map and location information of the terminal device, a predicted QoS parameter corresponding to the terminal device; or determining, based on the sensing map, the location information of the terminal device, and identification information of the terminal device, the predicted QoS parameter corresponding to the terminal device.

In a possible implementation method, the first request further includes indication information, and the indication information indicates to optimize communication through network sensing; and the obtaining the sensing map corresponding to the first area in which the terminal device is located includes: obtaining, based on the indication information, the sensing map corresponding to the first area.

In the foregoing solution, obtaining of the sensing map is explicitly triggered by using the indication information, so that QoS communication optimization based on the sensing map is flexibly and dynamically performed for a specific service or QoS flow.

In a possible implementation method, the first request further includes the location information of the terminal device; and the obtaining the sensing map corresponding to the first area in which the terminal device is located includes: determining information about the first area based on the location information of the terminal device; sending a sensing map request to a sensing network element, where the sensing map request includes the information about the first area; and receiving the sensing map from the sensing network element.

In a possible implementation method, the first request further includes the identification information of the terminal device; and the obtaining the sensing map corresponding to the first area in which the terminal device is located includes: sending a sensing map request to a sensing network element, where the sensing map request includes the identification information of the terminal device, and the identification information of the terminal device is used for determining information about the first area; and receiving the sensing map from the sensing network element.

In a possible implementation method, the first request further includes information about the first area; and the obtaining the sensing map corresponding to the first area in which the terminal device is located includes: sending a sensing map request to a sensing network element, where the sensing map request includes the information about the first area; and receiving the sensing map from the sensing network element.

In a possible implementation method, the receiving the first request includes: receiving the first request from a policy control network element; and the method further includes: sending a first response to the policy control network element, where the first response includes an accepted QoS parameter, or the first response indicates that the requested QoS parameter is rejected.

According to a second aspect, an embodiment of this application provides a communication method. The method may be performed by a policy control network element or a chip used in the policy control network element. The method includes: receiving a first request, where the first request includes a requested QoS parameter; sending a QoS analytics request to a data analytics network element, where the QoS analytics request includes at least one of identification information of a terminal device, location information of the terminal device, or information about a first area in which the terminal device is located; receiving a QoS analytics response from the data analytics network element, where the QoS analytics response includes a predicted QoS parameter, the predicted QoS parameter is determined based on a sensing map corresponding to the first area, and the sensing map is state information that is of an object in the first area and that is obtained through sensing; and determining, based on the predicted QoS parameter and the requested QoS parameter, whether to accept the requested QoS parameter.

In the foregoing solution, information in a sensing dimension is used as a consideration factor for communication control (for example, QoS) of the terminal device, that is, the predicted QoS parameter is determined based on the sensing map, and whether to accept the requested QoS parameter is determined based on the predicted QoS parameter, so that communication QoS of a service can be optimized, thereby improving service experience in communication.

In a possible implementation method, the receiving the first request, where the first request includes the requested QoS parameter may be replaced with: receiving a first request, where the first request includes indication information indicating a requested QoS parameter; and obtaining the requested QoS parameter based on the indication information.

In a possible implementation method, the determining, based on the predicted QoS parameter and the requested QoS parameter, whether to accept the requested QoS parameter includes: determining an accepted QoS parameter based on the predicted QoS parameter and the requested QoS parameter, where the accepted QoS parameter is the same as the requested QoS parameter, or a QoS level corresponding to the accepted QoS parameter is lower than a QoS level corresponding to the requested QoS parameter.

In the foregoing solution, the accepted QoS parameter may be obtained based on the sensing map and the requested QoS parameter, so that the accepted QoS parameter is used for QoS communication, appropriateness of a provided QoS parameter is ensured, and communication QoS of a service can be optimized, thereby improving service experience in communication.

In a possible implementation method, the determining, based on the predicted QoS parameter and the requested QoS parameter, whether to accept the requested QoS parameter includes: if determining, based on the predicted QoS parameter, that duration in which the requested QoS parameter cannot be met is greater than first duration, determining the accepted QoS parameter, where a QoS level corresponding to the accepted QoS parameter is lower than a QoS level corresponding to the requested QoS parameter.

In the foregoing solution, the accepted QoS parameter may be obtained based on the predicted QoS parameter and the requested QoS parameter, so that the accepted QoS parameter is used for QoS communication, appropriateness of a provided QoS parameter is ensured, and communication QoS of a service can be optimized, thereby improving service experience in communication.

In a possible implementation method, the determining, based on the predicted QoS parameter and the requested QoS parameter, whether to accept the requested QoS parameter includes: if determining, based on the predicted QoS parameter, that duration in which the requested QoS parameter cannot be met is greater than first duration, rejecting the requested QoS parameter.

In the foregoing solution, the requested QoS parameter may be rejected based on the predicted QoS parameter and the requested QoS parameter, to ensure that an inappropriate QoS parameter is not used, so that communication QoS of a service can be optimized, thereby improving service experience in communication.

In a possible implementation method, the determining, based on the predicted QoS parameter and the requested QoS parameter, whether to accept the requested QoS parameter includes: if determining, based on the predicted QoS parameter, that duration in which the requested QoS parameter can be met is greater than second duration, determining an accepted QoS parameter, where the accepted QoS parameter is the same as the requested QoS parameter. In the foregoing solution, the accepted QoS parameter may be obtained based on the predicted QoS parameter and the requested QoS parameter, so that the accepted QoS parameter is used for QoS communication, appropriateness of a provided QoS parameter is ensured, and communication QoS of a service can be optimized, thereby improving service experience in communication.

In a possible implementation method, the first request further includes indication information, and the indication information indicates to optimize communication through network sensing; and the sending the QoS analytics request to the data analytics network element includes: sending the QoS analytics request to the data analytics network element based on the indication information.

According to a third aspect, an embodiment of this application provides a communication method. The method may be performed by a data analytics network element or a chip used in the data analytics network element. The method includes: receiving a QoS analytics request, where the QoS analytics request includes at least one of identification information of a terminal device, location information of the terminal device, or information about a first area in which the terminal device is located; obtaining a sensing map corresponding to the first area, where the sensing map is state information that is of an object in the first area and that is obtained through sensing; determining a predicted QoS parameter based on the sensing map; and sending a QoS analytics response, where the QoS analytics response includes the predicted QoS parameter, and the predicted QoS parameter is used for determining whether to accept a requested QoS parameter.

In the foregoing solution, information in a sensing dimension is used as a consideration factor for communication control (for example, QoS) of the terminal device, that is, the predicted QoS parameter is determined based on the sensing map, and whether to accept the requested QoS parameter is determined based on the predicted QoS parameter, so that communication QoS of a service can be optimized, thereby improving service experience in communication.

In a possible implementation method, the QoS analytics request includes the identification information of the terminal device; and the obtaining the sensing map corresponding to the first area includes: sending a location information request to a mobility management network element, where the location information request includes the identification information of the terminal device; receiving a location information response from the mobility management network element, where the location information response includes the location information of the terminal device; determining the information about the first area based on the location information of the terminal device; sending a sensing map request to a sensing network element, where the sensing map request includes the information about the first area; and receiving the sensing map from the sensing network element.

In a possible implementation method, the QoS analytics request includes the location information of the terminal device; and the obtaining the sensing map corresponding to the first area includes: determining the information about the first area based on the location information of the terminal device; sending a sensing map request to a sensing network element, where the sensing map request includes the information about the first area; and receiving the sensing map from the sensing network element.

In a possible implementation method, the QoS analytics request includes the information about the first area; and the obtaining the sensing map corresponding to the first area includes: sending a sensing map request to a sensing network element, where the sensing map request includes the information about the first area; and receiving the sensing map from the sensing network element.

In a possible implementation method, the determining the predicted QoS parameter based on the sensing map includes: determining, based on the sensing map, a predicted QoS parameter corresponding to the first area; determining, based on the sensing map and the location information of the terminal device, a predicted QoS parameter corresponding to the terminal device; or determining, based on the sensing map, the location information of the terminal device, and the identification information of the terminal device, the predicted QoS parameter corresponding to the terminal device.

In a possible implementation method, the receiving the QoS analytics request includes: receiving the QoS analytics request from a policy control network element; and the sending the QoS analytics response includes: sending the QoS analytics response to the policy control network element.

According to a fourth aspect, an embodiment of this application provides a communication method. The method may be performed by a data analytics network element or a chip used in the data analytics network element. The method includes: receiving a QoS analytics request, where the QoS analytics request includes information about a first area; obtaining a sensing map corresponding to the first area, where the sensing map is state information that is of an object in the first area and that is obtained through sensing; determining a providable QoS parameter based on the sensing map; and sending a QoS analytics response, where the QoS analytics response includes the providable QoS parameter.

In the foregoing solution, information in a sensing dimension is used as a consideration factor for communication control (for example, QoS), that is, the providable QoS parameter is determined based on the sensing map, to implement more refined management and control on quality of service based on the providable QoS parameter, so that communication QoS of a service can be optimized, thereby improving service experience in communication.

In a possible implementation method, the QoS analytics request further includes time information; and the determining the providable QoS parameter based on the sensing map includes: determining the providable QoS parameter based on the sensing map and the time information.

In the foregoing solution, the providable QoS parameter is determined based on the sensing map and the time information. The providable QoS parameter may reflect providable QoS parameters in different time periods, to implement more refined management and control on quality of service.

In a possible implementation method, the determining the providable QoS parameter based on the sensing map includes: determining the providable QoS parameter based on the sensing map and the information about the first area.

In a possible implementation method, the obtaining the sensing map corresponding to the first area includes: sending a sensing map request to a sensing network element, where the sensing map request includes the information about the first area; and receiving the sensing map from the sensing network element.

In a possible implementation method, the receiving the QoS analytics request includes: receiving the QoS analytics request from an exposure function network element; and the sending the QoS analytics response includes: sending the QoS analytics response to the exposure function network element.

According to a fifth aspect, an embodiment of this application provides a communication apparatus. The apparatus may be a policy control network element, or may be a chip used in the policy control network element. The apparatus has a function of implementing any one of implementation methods according to the first aspect or the second aspect. The function may be implemented by hardware, or may be implemented by hardware executing corresponding software. The hardware or software includes one or more modules corresponding to the foregoing functions.

According to a sixth aspect, an embodiment of this application provides a communication apparatus. The apparatus may be a data analytics network element, or may be a chip used in the data analytics network element. The apparatus has a function of implementing any one of implementation methods according to the second aspect to the fourth aspect. The function may be implemented by hardware, or may be implemented by hardware executing corresponding software. The hardware or software includes one or more modules corresponding to the foregoing functions.

According to a seventh aspect, an embodiment of this application provides a communication apparatus, including units or means (means) for performing the steps of any one of the implementation methods according to the first aspect to the fourth aspect.

According to an eighth aspect, an embodiment of this application provides a communication apparatus, including a processor and an interface circuit. The processor is configured to communicate with another apparatus through the interface circuit, and perform any one of the implementation methods according to the first aspect to the fourth aspect. There are one or more processors.

According to a ninth aspect, an embodiment of this application provides a communication apparatus, including a processor. The processor is configured to invoke a program, to perform any one of the implementation methods according to the first aspect to the fourth aspect. In addition, there may be one or more processors.

Optionally, the communication apparatus may further include a memory. The memory is coupled to the processor. The memory may be located inside the apparatus, or may be located outside the apparatus.

According to a tenth aspect, an embodiment of this application provides a communication apparatus, including a processor. When the apparatus runs, the processor executes computer instructions, and the apparatus is caused to perform any one of implementation methods according to the first aspect to the fourth aspect.

Optionally, the communication apparatus may further include a memory, and the memory is configured to store the computer instructions.

According to an eleventh aspect, an embodiment of this application further provides a computer program product. The computer program product includes a computer program or instructions, and when the computer program or instructions are run by a communication apparatus, any one of the implementation methods according to the first aspect to the fourth aspect is performed.

According to a twelfth aspect, an embodiment of this application further provides a computer-readable storage medium. The computer-readable storage medium stores instructions. When the instructions are run on a communication apparatus, any one of the implementation methods according to the first aspect to the fourth aspect is performed.

According to a thirteenth aspect, an embodiment of this application further provides a chip system, including a processor, configured to perform any one of the implementation methods according to the first aspect to the fourth aspect.

According to a fourteenth aspect, an embodiment of this application further provides a communication system, including: a session management network element, configured to send a first request to a policy control network element, where the first request includes a requested QoS parameter; and the policy control network element, configured to: receive the first request; obtain a sensing map corresponding to a first area in which a terminal device is located, where the sensing map is state information that is of an object in the first area and that is obtained through sensing; and determine, based on the sensing map and the requested QoS parameter, whether to accept the requested QoS parameter.

According to a fifteenth aspect, an embodiment of this application further provides a communication system, including: a policy control network element, configured to: receive a first request, where the first request includes a requested QoS parameter; send a QoS analytics request to a data analytics network element, where the QoS analytics request includes at least one of identification information of a terminal device, location information of the terminal device, or information about a first area in which the terminal device is located; receive a QoS analytics response from the data analytics network element, where the QoS analytics response includes a predicted QoS parameter, the predicted QoS parameter is determined based on a sensing map corresponding to the first area, and the sensing map is state information that is of an object in the first area and that is obtained through sensing; and determine, based on the predicted QoS parameter and the requested QoS parameter, whether to accept the requested QoS parameter; and the data analytics network element, configured to: receive the QoS analytics request; obtain the sensing map corresponding to the first area; determine the predicted QoS parameter based on the sensing map; and send the QoS analytics response to the policy control network element.

According to a sixteenth aspect, an embodiment of this application further provides a communication system, including: a policy control network element, configured to send a first request to a data analytics network element, where the first request includes a requested QoS parameter; and the data analytics network element, configured to: receive the first request; obtain a sensing map corresponding to a first area in which a terminal device is located, where the sensing map is state information that is of an object in the first area and that is obtained through sensing; and determine, based on the sensing map and the requested QoS parameter, whether to accept the requested QoS parameter.

According to a seventeenth aspect, an embodiment of this application further provides a communication system, including: an exposure function network element, configured to: send a QoS analytics request to a data analytics network element, where the QoS analytics request includes information about a first area; and receive a QoS analytics response from the data analytics network element, where the QoS analytics response includes a providable QoS parameter; and the data analytics network element, configured to: receive the QoS analytics request; obtain a sensing map corresponding to the first area, where the sensing map is state information that is of an object in the first area and that is obtained through sensing; determine the providable QoS parameter based on the sensing map; and send the QoS analytics response to the exposure function network element.

### BRIEF DESCRIPTION OF DRAWINGS

FIG. 1a is a diagram of a 5G network architecture based on a service-based architecture;
FIG. 1b is a diagram of a 5G network architecture based on a point-to-point interface;
FIG. 2a is a schematic flowchart of a communication method according to an embodiment of this application;
FIG. 2b is a schematic flowchart of a communication method according to an embodiment of this application;
FIG. 2c is a schematic flowchart of a communication method according to an embodiment of this application;
FIG. 2d is a schematic flowchart of a communication method according to an embodiment of this application;
FIG. 3 to FIG. 6 are schematic flowcharts of a communication method according to an embodiment of this application;
FIG. 7 is a diagram of a communication apparatus according to an embodiment of this application; and
FIG. 8 is a diagram of a communication apparatus according to an embodiment of this application.

### DESCRIPTION OF EMBODIMENTS

In face of challenges of a wireless broadband technology and maintain a leading position of a 3rd generation partnership project (3rd generation partnership project, 3GPP) network, the 3GPP standard group has formulated a next generation mobile communication network system (next generation System) architecture, which is referred to as a 5th generation (5th generation, 5G) network architecture. The architecture not only supports access to a 5G core network (core network, CN) by using a radio access technology (for example, a long term evolution (long term evolution, LTE) access technology and a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

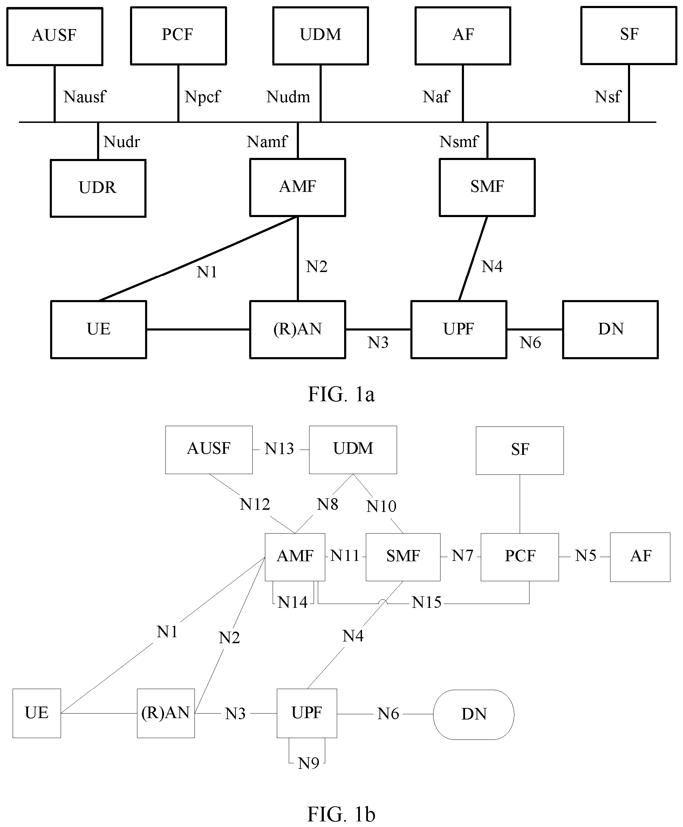

FIG. 1a is a diagram of a 5G network architecture based on a service-based architecture. The 5G network architecture shown in FIG. 1a may include an access network device and a core network device. A terminal device accesses a data network (data network, DN) through the access network device and the core network device. The core network device includes but is not limited to some or all of the following network elements: an authentication server function (authentication server function, AUSF) network element, a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a sensing function (sensing function, SF) network element, and a network data analytics function (network data analysis function, NWDAF) network element (not shown in the figure).

The terminal device may be user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wear, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like. For ease of description, in this application, an example in which UE is used as the terminal device is used for description, and UE that appears at any location subsequently may be replaced with a terminal device.

The access network device may be a radio access network device (RAN device) or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, and a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wired access network device includes but is not limited to: a wireline access gateway (wireline access gateway), a fixed-line phone network device, a switch, or a router. For ease of description, in this application, an example in which a base station is used as the access network device is used for description, and a base station that appears at any location subsequently may be replaced with an access network device.

The base station and the UE may be fixed or movable. The base station and the UE may be deployed on land, including an indoor or outdoor scenario, and a handheld or vehicle-mounted scenario; or may be deployed on water; or may be deployed on an airplane, a balloon, or an artificial satellite in the air. Application scenarios of the base station and the UE are not limited in embodiments of this application.

The AMF network element includes functions such as mobility management or access authentication/authorization. In addition, the AMF network element is further responsible for transferring a user policy between the UE and the PCF.

The SMF network element includes functions such as session management, execution of a control policy delivered by the PCF network element, selection of the UPF network element, or UE internet protocol (internet protocol, IP) address allocation.

The UPF network element includes functions such as completing user plane data forwarding, session/flow-level charging statistics, or bandwidth limitation.

The UDM network element includes functions such as subscription data management or user access authorization.

The UDR includes functions for accessing subscription data, policy data, application data, or other types of data.

The NEF network element is configured to support exposure of capabilities and events.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element includes policy control functions such as being responsible for charging at a session or service flow level, QoS bandwidth assurance and mobility management, and UE policy decision. The PCF network element includes an access and mobility management policy control network element (access and mobility management policy control function, AM PCF) network element and a session management policy control function (session management PCF, SM PCF) network element. The AM PCF network element is configured to formulate an AM policy and a user policy for UE. The AM PCF network element may also be referred to as a policy control network element that provides a service for UE (PCF for UE). The SM PCF network element is configured to formulate a session management policy (session management policy, SM policy) for a session, and the SM PCF network element may also be referred to as a policy control network element that provides a service for a protocol data unit (protocol data unit, PDU) session (PCF for a PDU session).

The NRF network element may be configured to provide a network element discovery function, and provide network element information corresponding to a network element type based on a request of another network element. The NRF network element further provides a network element management service, for example, network element registration, update, and deregistration, or network element status subscription and push.

The SF network element may generate a sensing map based on obtained sensing measurement data.

The AUSF network element is responsible for authenticating a user, to determine whether the user or a device is allowed to access a network.

The NWDAF network element can analyze collected data to obtain analytics results.

The DN is a network located outside an operator network. A plurality of DNs can access the operator network, and a plurality of services can be deployed on the DN, to provide services such as a data service and/or a voice service for UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server to obtain an instruction of the control server, transmit collected sensor data to the control server according to the instruction, and the like. For another example, the DN is an internal office network of a company, a mobile phone or a computer of an employee in the company may be the UE, and the mobile phone or the computer of the employee can access information, a data resource, or the like on the internal office network of the company.

Npcf, Nudr, Nudm, Naf, Namf, Nsmf, and Nsf in FIG. 1a are service-based interfaces respectively provided by the foregoing PCF, UDR, UDM, AF, AMF, SMF, and SF, and are configured to invoke corresponding service-based operations. N1, N2, N3, N4, and N6 are interface sequence numbers. Meanings of these interface sequence numbers are as follows:
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the base station, and may be configured to transfer radio bearer control information from a core network side to the base station, and the like.
(3) N3 is an interface between the base station and the UPF network element, and is mainly configured to transfer uplink and downlink user plane data between the base station and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

FIG. 1b is a diagram of a 5G network architecture based on a point-to-point interface. For descriptions of functions of network elements in the 5G network architecture, refer to descriptions of functions of corresponding network elements in FIG. 1a. Details are not described again. A main difference between FIG. 1b and FIG. 1a lies that interfaces between control plane network elements in FIG. 1a are service-based interfaces, and interfaces between control plane network elements in FIG. 1b are point-to-point interfaces.

In the architecture shown in FIG. 1b, names and functions of interfaces between the network elements are as follows.
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a PDU session granularity control policy and a service data flow granularity control policy.
(4) N8 is an interface between the AMF network element and the UDM network element, and may be used by the AMF network element to obtain subscription data and authentication data that are related to access and mobility management from the UDM network element, and used by the AMF network element to register information related to UE mobility management with the UDM network element, and the like.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain subscription data related to session management from the UDM network element, and used by the SMF network element to register information related to a UE session with the UDM network element, and the like.
(7) N11 is an interface between the SMF network element and the AMF network element, and may be configured to transfer PDU session tunnel information between the base station and the UPF network element, transfer a control message sent to the UE, transfer radio resource control information sent to the base station, and so on.
(8) N12 is an interface between the AMF network element and the AUSF.
(9) N13 is an interface between the AUSF network element and the UDM network element.
(10) N15 is an interface between the PCF network element and the AMF network element, and may be configured to deliver a UE policy and an access control-related policy.
(11) N35 is an interface between the UDM network element and the UDR network element, and may be used by the UDM network element to obtain user subscription data information from the UDR network element.
(12) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in embodiments of this application.

The policy control network element, the exposure function network element, the data analytics network element, the sensing network element, and the mobility management network element in this application may be respectively the PCF network element, the NEF network element, the NWDAF network element, the SF network element, and the AMF network element in FIG. 1a or FIG. 1b, or may be network elements that have functions of the PCF network element, the NEF network element, the NWDAF network element, the SF network element, and the AMF network element in future communication, for example, a 6G network. This is not limited in this application. In embodiments of this application, an example in which the PCF network element, the NEF network element, the NWDAF network element, the SF network element, and the AMF network element are respectively a policy control network element, an exposure function network element, a data analytics network element, a sensing network element, and a mobility management network element is used for description, and the PCF network element, the NEF network element, the NWDAF network element, the SF network element, and the AMF network element are respectively referred to as a PCF, an NEF, an NWDAF, an SF, and an AMF for short.

QoS is a capability of a network to use various basic technologies to provide a better service for specified network communication, is a security mechanism of the network, and is a technology used to resolve problems such as network latency and network congestion. QoS guarantee is of great importance for networks with limited capacity, especially for streaming multimedia services because these applications often require a fixed transmission rate and are sensitive to latency. How to optimize communication QoS of a service to improve service experience in communication is a problem that needs continuous attention.

To resolve the foregoing problems, this application provides a plurality of solutions, which are separately described below.

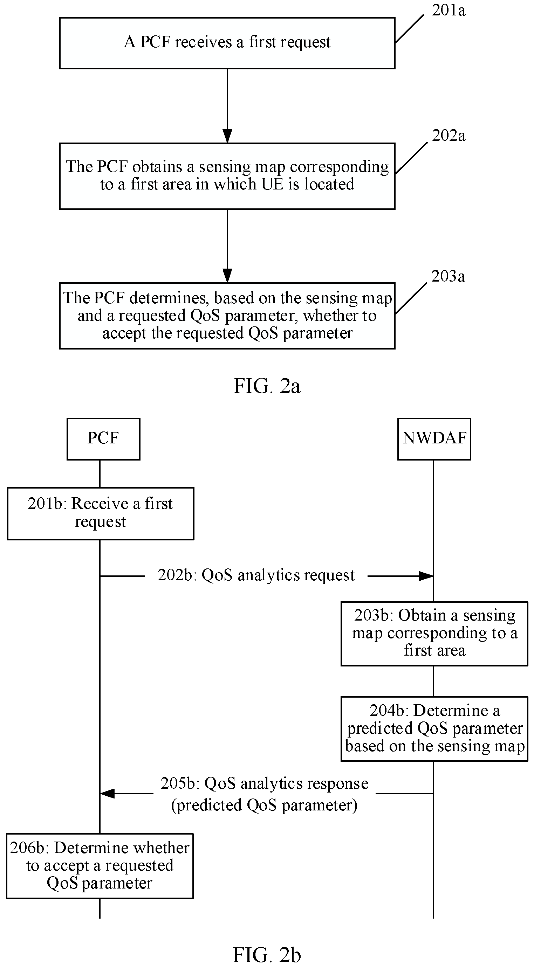

FIG. 2a is a schematic flowchart of a communication method according to an embodiment of this application. The method includes the following steps.

Step 201a: A PCF receives a first request, where the first request includes a requested QoS parameter.

Specifically, the PCF may receive the first request from UE, an SMF, an NEF, an AF, or another network element.

In an implementation method, step 201a may be replaced with: A PCF receives a first request, where the first request includes indication information indicating a requested QoS parameter, and the PCF obtains the requested QoS parameter based on the indication information.

Optionally, the first request is a first request for the UE. In other words, the first request includes a requested QoS parameter for the UE. The UE herein is UE in step 202a.

Optionally, the requested QoS parameter includes a QoS index (QoS Reference) or explicit QoS parameter (individual QoS parameter) content, and optionally further includes an alternative service requirement (Alternative Service Requirement) of the requested QoS parameter. This is not repeated in subsequent embodiments.

Step 202a: The PCF obtains a sensing map corresponding to a first area in which the UE is located.

The sensing map is state information that is of an object in the first area and that is obtained through sensing, and is used for reflecting environment information of the first area, for example, reflecting one or more of a quantity of objects, an object distribution status, an object type, an object size, an object outline, a moving speed of an object, or a moving direction of the object that are in the first area. The sensing map is also referred to as a sensing result or the like. The definition and the function of the sensing map apply throughout and will not be repeated below.

In an implementation method, the first request further includes identification information of the UE (that is, a UE ID). Step 202a is specifically: The PCF sends a sensing map request to an SF, where the sensing map request includes the UE ID; and then the SF determines the sensing map based on the UE ID, and sends the sensing map to the PCF. For example, that the SF determines a first sensing map based on the UE ID may be specifically: The SF sends a location information request to an AMF, where the location information request includes the UE ID and is used for requesting location information of the UE; the AMF sends a location information response to the SF, where the location information response carries the location information of the UE; then, the SF determines, based on the location information of the UE, information about the first area in which the UE is located; next, the SF sends a request message to a sensing device, where the request message includes the information about the first area; the sensing device sends a response message to the SF, where the response message includes sensing measurement data corresponding to the first area; and then, the SF generates the sensing map based on the sensing measurement data. The manner in which the SF obtains the sensing measurement data corresponding to the first area described herein is merely an example. Actually, there is another manner. For example, the SF sends the request message to the sensing device, where the request message includes the location information of the UE; the sensing device determines the information about the first area based on the location information of the UE; and the sensing device obtains the sensing measurement data corresponding to the first area, and sends the response message to the SF, where the response message includes the sensing measurement data corresponding to the first area.

In another implementation method, the first request further includes location information of the UE. Step 202a is specifically: The PCF sends a sensing map request to an SF, where the sensing map request includes the location information of the UE; and then the SF determines the sensing map based on the location information of the UE, and sends the sensing map to the PCF. For example, that the SF determines a first sensing map based on the location information of the UE may be specifically: The SF determines, based on the location information of the UE, information about the first area in which the UE is located; then, the SF sends a request message to a sensing device, where the request message includes the information about the first area; the sensing device sends a response message to the SF, where the response message includes sensing measurement data corresponding to the first area; and then, the SF generates the sensing map based on the sensing measurement data. The manner in which the SF obtains the sensing measurement data corresponding to the first area described herein is merely an example. Actually, there is another manner. For example, the SF sends the request message to the sensing device, where the request message includes the location information of the UE; the sensing device determines the information about the first area based on the location information of the UE; and the sensing device obtains the sensing measurement data corresponding to the first area, and sends the response message to the SF, where the response message includes the sensing measurement data corresponding to the first area.

In another implementation method, the first request further includes information about the first area. Step 202a is specifically: The PCF sends a sensing map request to an SF, where the sensing map request includes the information about the first area; and then the SF determines the sensing map based on the information about the first area, and sends the sensing map to the PCF. For example, that the SF determines a first sensing map based on the information about the first area may be specifically: The SF sends a request message to a sensing device, where the request message includes the information about the first area; the sensing device sends a response message to the SF, where the response message includes sensing measurement data corresponding to the first area; and then, the SF generates the sensing map based on the sensing measurement data.

It may be understood that the sensing map request may be understood as a request used for requesting to obtain the sensing map or a request used for triggering the SF to initiate a sensing procedure. A name of the request is not limited in this application. The sensing map request is not described in detail below again.

In embodiments of this application, the sensing device may be integrated into a base station, that is, the sensing device is a functional module of the base station. Alternatively, the sensing device is an independent entity device. For example, the sensing device is an independent terminal device. This is not limited in this application.

In an implementation method, the first request further includes indication information, and the indication information indicates to optimize communication through network sensing. Step 202a is specifically: The PCF obtains, based on the indication information, the sensing map corresponding to the first area. That is, the indication information triggers the PCF to perform step 202a.

In another implementation method, the PCF may alternatively actively perform step 202a according to a local policy.

Step 203a: The PCF determines, based on the sensing map and the requested QoS parameter, whether to accept the requested QoS parameter.

For example, the PCF may determine, based on the sensing map and the location information of the UE, whether to accept the requested QoS parameter.

In an implementation method, step 203a specifically includes: If determining, based on the sensing map, that duration in which the requested QoS parameter cannot be met is less than or equal to first duration, the PCF determines an accepted QoS parameter, where the accepted QoS parameter is the same as the requested QoS parameter, or a QoS level corresponding to the accepted QoS parameter is lower than a QoS level corresponding to the requested QoS parameter. For example, when the PCF determines that a location of the UE is blocked by a dynamic moving object, QoS may potentially experience temporary degradation. In this case, the PCF may accept the requested QoS parameter or determine a low-level QoS parameter.

In another implementation method, step 203a specifically includes: If determining, based on the sensing map, that duration in which the requested QoS parameter cannot be met is greater than first duration, the PCF determines an accepted QoS parameter, where a QoS level corresponding to the accepted QoS parameter is lower than a QoS level corresponding to the requested QoS parameter. For example, when the PCF determines that a location of the UE is blocked by a static object or a large quantity of/high density of objects, QoS may potentially experience permanent degradation. In this case, the PCF still determines the accepted QoS parameter, but the QoS level corresponding to the accepted QoS parameter is lower than the QoS level corresponding to the requested QoS parameter. Optionally, the PCF further determines holding time of the QoS level corresponding to the accepted QoS parameter.

In another implementation method, step 203a specifically includes: If determining, based on the sensing map, that duration in which the requested QoS parameter cannot be met is greater than first duration, the PCF rejects the requested QoS parameter. For example, when the PCF determines that a location of the UE is blocked by a static object or a large quantity of/high density of objects, QoS may potentially experience permanent degradation. In this case, the PCF rejects the requested QoS parameter.

In another implementation method, step 203a specifically includes: If determining, based on the sensing map, that duration in which the requested QoS parameter can be met is greater than second duration, the PCF accepts the requested QoS parameter, that is, determines that an accepted QoS parameter is the same as the requested QoS parameter. For example, when the PCF determines that a location of the UE is blocked by a dynamic moving object, QoS may potentially experience temporary degradation, or there is no object blocking. In this case, the PCF may accept the requested QoS parameter.

In another implementation method, step 203a specifically includes: If determining, based on the sensing map, that duration in which the requested QoS parameter can be met is less than or equal to second duration, the PCF determines an accepted QoS parameter, where a QoS level corresponding to the accepted QoS parameter is lower than a QoS level corresponding to the requested QoS parameter. For example, when the PCF determines that a location of the UE is blocked by a static object or a large quantity of/high density of objects, QoS may potentially experience permanent degradation. In this case, the PCF still determines the accepted QoS parameter, but the QoS level corresponding to the accepted QoS parameter is lower than the QoS level corresponding to the requested QoS parameter. Optionally, the PCF further determines holding time of the QoS level corresponding to the accepted QoS parameter.

In another implementation method, step 203a specifically includes: If determining, based on the sensing map, that duration in which the requested QoS parameter can be met is less than or equal to second duration, the PCF rejects the requested QoS parameter. For example, when the PCF determines that a location of the UE is blocked by a static object or a large quantity of/high density of objects, QoS may potentially experience permanent degradation. In this case, the PCF rejects the requested QoS parameter.

In another implementation method, step 203a specifically includes: The PCF determines a predicted QoS parameter based on the sensing map; and determines, based on the predicted QoS parameter and the requested QoS parameter, whether to accept the requested QoS parameter. For example, that the PCF determines the predicted QoS parameter based on the sensing map specifically includes: The PCF determines, based on the sensing map, a predicted QoS parameter corresponding to the first area; the PCF determines, based on the sensing map and location information of a terminal device, a predicted QoS parameter corresponding to the terminal device; or the PCF determines, based on the sensing map, the location information of the terminal device, and identification information of the terminal device, the predicted QoS parameter corresponding to the terminal device. There are a plurality of implementation methods for the PCF to determine, based on the predicted QoS parameter and the requested QoS parameter, whether to accept the requested QoS parameter. For detailed descriptions, refer to descriptions in step 206b in the embodiment in FIG. 2b. Details are not described herein.

In the foregoing solution, information in a sensing dimension is used as a consideration factor for communication control (for example, QoS) of the UE, that is, the PCF determines, based on the sensing map, whether to accept the requested QoS parameter, so that communication QoS of a service can be optimized, thereby improving service experience in communication.

It should be noted that, in the embodiment in FIG. 2a, after receiving the first request, the PCF obtains a corresponding sensing map, and determines, based on the sensing map, whether to accept the requested QoS parameter. In another implementation method, the PCF may alternatively subscribe to, from the SF in advance, a sensing map corresponding to a service area of the PCF, and the PCF may dynamically receive a latest sensing map. Then, after subsequently receiving the first request, the PCF may directly determine, based on the sensing map, whether to accept the requested QoS parameter. In this way, efficiency of determining whether to accept the requested QoS parameter can be improved.

FIG. 2b is a schematic flowchart of a communication method according to an embodiment of this application. The method includes the following steps.

Step 201b: A PCF receives a first request, where the first request includes a requested QoS parameter.

Specifically, the PCF may receive the first request from UE, an SMF, an NEF, an AF, or another network element.

In an implementation method, step 201b may be replaced with: A PCF receives a first request, where the first request includes indication information indicating a requested QoS parameter; and the PCF obtains the requested QoS parameter based on the indication information.

For details of step 201b, refer to step 201a.

Step 202b: The PCF sends a QoS analytics request to an NWDAF. Correspondingly, the NWDAF receives the QoS analytics request.

The QoS analytics request includes a UE ID, location information of the UE, or information about a first area in which the UE is located.

In an implementation method, if the first request further includes a UE ID, the QoS analytics request includes the UE ID; if the PCF obtains location information of the UE from an AMF based on the UE ID, the QoS analytics request includes the location information of the UE; or if the PCF further determines, based on the location information of the UE, information about a first area in which the UE is located, the QoS analytics request includes the information about the first area.

In another implementation method, if the first request further includes location information of the UE, the QoS analytics request includes the location information of the UE; or if the PCF determines, based on the location information of the UE, information about a first area in which the UE is located, the QoS analytics request includes the information about the first area.

In another implementation method, the first request further includes information about a first area in which the UE is located, and the QoS analytics request includes the information about the first area.

In an implementation method, the first request further includes indication information, and the indication information indicates to optimize communication through network sensing. Step 202b is specifically: The PCF sends the QoS analytics request to the NWDAF based on the indication information. That is, the indication information triggers the PCF to perform step 202b.

Step 203b: The NWDAF obtains a sensing map corresponding to the first area.

The sensing map is state information that is of an object in the first area and that is obtained through sensing.

In an implementation method, if the QoS analytics request includes the UE ID, the NWDAF sends a location information request to the AMF, where the location information request includes the UE ID and is used for requesting location information of the UE. The AMF sends a location information response to the NWDAF, where the location information response carries the location information of the UE. Then, the NWDAF determines, based on the location information of the UE, the information about the first area in which the UE is located. Next, the NWDAF sends a sensing map request to an SF, where the sensing map request includes the information about the first area. Then, the SF sends a request message to a sensing device, where the request message includes the information about the first area. The sensing device sends a response message to the SF, where the response message includes sensing measurement data corresponding to the first area. Then, the SF generates the sensing map based on the sensing measurement data, and sends a sensing map response to the NWDAF, where the sensing map response includes the sensing map.

In another implementation method, if the QoS analytics request includes the location information of the UE, the NWDAF determines, based on the location information of the UE, information about the first area in which the UE is located. Next, the NWDAF sends a sensing map request to an SF, where the sensing map request includes the information about the first area. Then, the SF sends a request message to a sensing device, where the request message includes the information about the first area. The sensing device sends a response message to the SF, where the response message includes sensing measurement data corresponding to the first area. Then, the SF generates the sensing map based on the sensing measurement data, and sends a sensing map response to the NWDAF, where the sensing map response includes the sensing map.

In another implementation method, if the QoS analytics request includes the information about the first area, the NWDAF sends a sensing map request to an SF, where the sensing map request includes the information about the first area. Then, the SF sends a request message to a sensing device, where the request message includes the information about the first area. The sensing device sends a response message to the SF, where the response message includes sensing measurement data corresponding to the first area. Then, the SF generates the sensing map based on the sensing measurement data, and sends a sensing map response to the NWDAF, where the sensing map response includes the sensing map.

Step 204b: The NWDAF determines a predicted QoS parameter based on the sensing map.

Because there is a static object and/or a dynamic object in the sensing map, the predicted QoS parameter determined by the NWDAF reflects a blocking status of the object at a location, or a blocking status of the object at a location at a time point, so that a corresponding QoS parameter, that is, the predicted QoS parameter, can be determined.

Generally, when a location is blocked by a dynamic moving object, QoS may potentially experience temporary degradation. In this case, a QoS level corresponding to the predicted QoS parameter may be high. When a location is blocked by a static object or a large quantity of/high density of objects, QoS may potentially experience permanent degradation. In this case, a QoS level corresponding to the predicted QoS parameter may be low.

In an implementation method, step 204b specifically includes: The NWDAF determines, based on the sensing map, a predicted QoS parameter corresponding to the first area.

In another implementation method, step 204b specifically includes: The NWDAF determines, based on the sensing map and location information of a terminal device, a predicted QoS parameter corresponding to the terminal device.

In another implementation method, step 204b specifically includes: The NWDAF determines, based on the sensing map, location information of a terminal device, and identification information of the terminal device, a predicted QoS parameter corresponding to the terminal device.

Step 205b: The NWDAF sends a QoS analytics response to the PCF. Correspondingly, the PCF receives the QoS analytics response.

The QoS analytics response includes the predicted QoS parameter.

Step 206b: The PCF determines, based on the predicted QoS parameter and the requested QoS parameter, whether to accept the requested QoS parameter.

For example, the PCF may determine, based on the predicted QoS parameter and the location information of the UE, whether to accept the requested QoS parameter.

In an implementation method, step 206b specifically includes: If determining, based on the predicted QoS parameter, that duration in which the requested QoS parameter cannot be met is less than or equal to first duration, the PCF determines an accepted QoS parameter, where the accepted QoS parameter is the same as the requested QoS parameter, or a QoS level corresponding to the accepted QoS parameter is lower than a QoS level corresponding to the requested QoS parameter. For example, when a location of the UE is blocked by a dynamic moving object, QoS may potentially experience temporary degradation, that is, the predicted QoS parameter cannot meet the requested QoS parameter, but the duration is short. In this case, the PCF may accept the requested QoS parameter or determine a low-level QoS parameter.

In another implementation method, step 206b specifically includes: If determining, based on the predicted QoS parameter, that duration in which the requested QoS parameter cannot be met is greater than first duration, the PCF determines an accepted QoS parameter, where a QoS level corresponding to the accepted QoS parameter is lower than a QoS level corresponding to the requested QoS parameter. For example, when a location of the UE is blocked by a static object or a large quantity of/high density of objects, QoS may potentially experience permanent degradation, that is, the predicted QoS parameter cannot meet the requested QoS parameter, and the duration is long. In this case, the PCF still determines the accepted QoS parameter, but the QoS level corresponding to the accepted QoS parameter is lower than the QoS level corresponding to the requested QoS parameter. Optionally, the PCF further determines holding time of the QoS level corresponding to the accepted QoS parameter.

In another implementation method, step 206b specifically includes: If determining, based on the predicted QoS parameter, that duration in which the requested QoS parameter cannot be met is greater than first duration, the PCF may reject the requested QoS parameter. For example, when a location of the UE is blocked by a static object or a large quantity of/high density of objects, QoS may potentially experience permanent degradation, that is, the predicted QoS parameter cannot meet the requested QoS parameter, and the duration is long. In this case, the requested QoS parameter is rejected.

In another implementation method, step 206b specifically includes: If determining, based on the predicted QoS parameter, that duration in which the requested QoS parameter can be met is greater than second duration, the PCF accepts the requested QoS parameter, that is, determines that the accepted QoS parameter is the same as the requested QoS parameter. For example, when the PCF determines that a location of the UE is blocked by a dynamic moving object, QoS may potentially experience temporary degradation, or there is no object blocking. In this case, the PCF may accept the requested QoS parameter.

In another implementation method, step 206b specifically includes: If determining, based on the predicted QoS parameter, that duration in which the requested QoS parameter can be met is less than or equal to second duration, the PCF determines an accepted QoS parameter, where a QoS level corresponding to the accepted QoS parameter is lower than a QoS level corresponding to the requested QoS parameter. For example, when the PCF determines that a location of the UE is blocked by a static object or a large quantity of/high density of objects, QoS may potentially experience permanent degradation. In this case, the PCF still determines the accepted QoS parameter, but the QoS level corresponding to the accepted QoS parameter is lower than the QoS level corresponding to the requested QoS parameter. Optionally, the PCF further determines holding time of the QoS level corresponding to the accepted QoS parameter.

In another implementation method, step 206b specifically includes: If determining, based on the predicted QoS parameter, that duration in which the requested QoS parameter can be met is less than or equal to second duration, the PCF rejects the requested QoS parameter. For example, when the PCF determines that a location of the UE is blocked by a static object or a large quantity of/high density of objects, QoS may potentially experience permanent degradation. In this case, the PCF rejects the requested QoS parameter.

In the foregoing solution, information in a sensing dimension is used as a consideration factor for communication control (for example, QoS) of the UE, that is, the NWDAF determines the predicted QoS parameter based on the sensing map and sends the predicted QoS parameter to the PCF, and the PCF determines, based on the predicted QoS parameter, whether to accept the requested QoS parameter, so that communication QoS of a service can be optimized, thereby improving service experience in communication.

It should be noted that, in the embodiment in FIG. 2b, after receiving the QoS analytics request from the PCF, the NWDAF obtains a corresponding sensing map, and determines the predicted QoS parameter based on the sensing map. In another implementation method, the NWDAF may alternatively obtain information about a service area of the PCF in advance, and subscribe to, from the SF, a sensing map corresponding to the service area of the PCF. The NWDAF may dynamically receive a latest sensing map. Then, after subsequently receiving the QoS analytics request, the NWDAF may directly determine the predicted QoS parameter based on the sensing map. In this way, efficiency of determining the predicted QoS parameter can be improved.

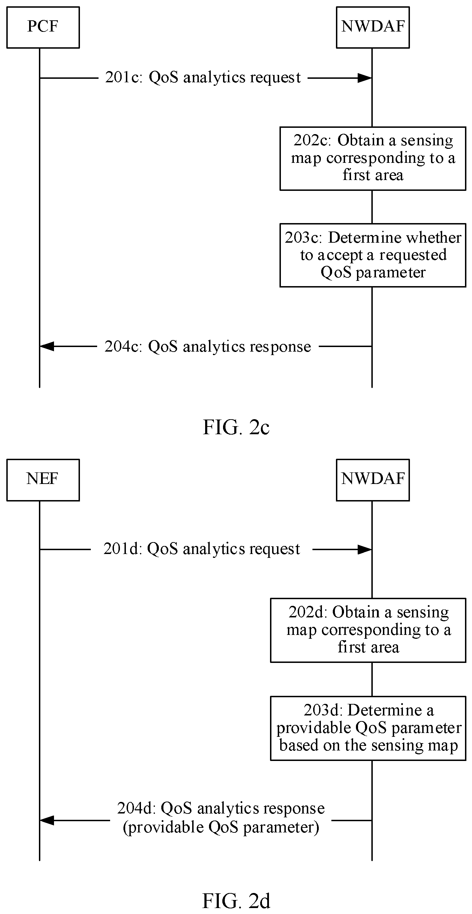

FIG. 2c is a schematic flowchart of a communication method according to an embodiment of this application. The method includes the following steps.

Step 201c: A PCF sends a QoS analytics request to an NWDAF. Correspondingly, the NWDAF receives the QoS analytics request.

The QoS analytics request includes a requested QoS parameter and information about a first area in which UE is located.

Step 202c: The NWDAF obtains a sensing map corresponding to the first area.

Specifically, the NWDAF sends a sensing map request to an SF, where the sensing map request includes the information about the first area. Then, the SF sends a request message to a sensing device, where the request message includes the information about the first area. The sensing device sends a response message to the SF, where the response message includes sensing measurement data corresponding to the first area. Then, the SF generates the sensing map based on the sensing measurement data, and sends a sensing map response to the NWDAF, where the sensing map response includes the sensing map.

Step 203c: The NWDAF determines, based on the sensing map and the requested QoS parameter, whether to accept the requested QoS parameter.

For example, the NWDAF may determine, based on the sensing map and location information of the UE, whether to accept the requested QoS parameter.

In an implementation method, step 203c specifically includes: If determining, based on the sensing map, that duration in which the requested QoS parameter cannot be met is less than or equal to first duration, the NWDAF determines an accepted QoS parameter, where the accepted QoS parameter is the same as the requested QoS parameter, or a QoS level corresponding to the accepted QoS parameter is lower than a QoS level corresponding to the requested QoS parameter. For example, when the PCF determines that a location of the UE is blocked by a dynamic moving object, QoS may potentially experience temporary degradation. In this case, the PCF may accept the requested QoS parameter or determine a low-level QoS parameter.

In another implementation method, step 203c specifically includes: If determining, based on the sensing map, that duration in which the requested QoS parameter cannot be met is greater than first duration, the NWDAF determines an accepted QoS parameter, where a QoS level corresponding to the accepted QoS parameter is lower than a QoS level corresponding to the requested QoS parameter. For example, when the NWDAF determines that a location of the UE is blocked by a static object or a large quantity of/high density of objects, QoS may potentially experience permanent degradation. In this case, the NWDAF still determines the accepted QoS parameter, but the QoS level corresponding to the accepted QoS parameter is lower than the QoS level corresponding to the requested QoS parameter. Optionally, the NWDAF further determines holding time of the QoS level corresponding to the accepted QoS parameter.

In another implementation method, step 203c specifically includes: If determining, based on the sensing map, that duration in which the requested QoS parameter cannot be met is greater than first duration, the NWDAF rejects the requested QoS parameter. For example, when the NWDAF determines that a location of the UE is blocked by a static object or a large quantity of/high density of objects, QoS may potentially experience permanent degradation. In this case, the NWDAF rejects the requested QoS parameter.

In another implementation method, step 203c specifically includes: If determining, based on the sensing map, that the duration in which the requested QoS parameter can be met is greater than second duration, the NWDAF accepts the requested QoS parameter, that is, determines that an accepted QoS parameter is the same as the requested QoS parameter. For example, when the NWDAF determines that a location of the UE is blocked by a dynamic moving object, QoS may potentially experience temporary degradation, or there is no object blocking. In this case, the NWDAF may accept the requested QoS parameter.

In another implementation method, step 203c specifically includes: If determining, based on the sensing map, that duration in which the requested QoS parameter can be met is less than or equal to second duration, the NWDAF determines an accepted QoS parameter, where a QoS level corresponding to the accepted QoS parameter is lower than a QoS level corresponding to the requested QoS parameter. For example, when the NWDAF determines that a location of the UE is blocked by a static object or a large quantity of/high density of objects, QoS may potentially experience permanent degradation. In this case, the NWDAF still determines the accepted QoS parameter, but the QoS level corresponding to the accepted QoS parameter is lower than the QoS level corresponding to the requested QoS parameter. Optionally, the NWDAF further determines holding time of the QoS level corresponding to the accepted QoS parameter.

In another implementation method, step 203c specifically includes: If determining, based on the sensing map, that duration in which the requested QoS parameter can be met is less than or equal to second duration, the NWDAF rejects the requested QoS parameter. For example, when the NWDAF determines that a location of the UE is blocked by a static object or a large quantity of/high density of objects, QoS may potentially experience permanent degradation. In this case, the NWDAF rejects the requested QoS parameter.

In another implementation method, step 203c specifically includes: The NWDAF determines a predicted QoS parameter based on the sensing map; and determines, based on the predicted QoS parameter and the requested QoS parameter, whether to accept the requested QoS parameter. For example, that the NWDAF determines the predicted QoS parameter based on the sensing map specifically includes: The NWDAF determines, based on the sensing map, a predicted QoS parameter corresponding to the first area; the NWDAF determines, based on the sensing map and location information of a terminal device, the predicted QoS parameter corresponding to the terminal device; or the NWDAF determines, based on the sensing map, the location information of the terminal device, and identification information of the terminal device, the predicted QoS parameter corresponding to the terminal device. There are a plurality of implementation methods for the NWDAF to determine, based on the predicted QoS parameter and the requested QoS parameter, whether to accept the requested QoS parameter. For detailed descriptions, refer to the descriptions in step 206b in the embodiment in FIG. 2b. Details are not described herein again.

Step 204c: The NWDAF sends a QoS analytics response to the PCF. Correspondingly, the PCF receives the QoS analytics response.

The QoS analytics response includes the accepted QoS parameter, or the QoS analytics response indicates that the requested QoS parameter is rejected.

In the foregoing solution, information in a sensing dimension is used as a consideration factor for communication control (for example, QoS), that is, the NWDAF determines, based on the sensing map, whether to accept a QoS parameter, to implement more refined management and control on quality of service, so that communication QoS of a service can be optimized, thereby improving service experience in communication.

It should be noted that, in the embodiment in FIG. 2c, after receiving the QoS analytics request, the NWDAF obtains a corresponding sensing map, and determines, based on the sensing map, whether to accept the requested QoS parameter. In another implementation method, the NWDAF may alternatively obtain information about a service area of the PCF in advance, and subscribe to, from the SF, a sensing map corresponding to the service area of the PCF. The NWDAF may dynamically receive a latest sensing map. Then, after subsequently receiving the QoS analytics request, the NWDAF may directly determine, based on the sensing map, whether to accept the requested QoS parameter. In this way, efficiency of determining whether to accept the requested QoS parameter can be improved.

FIG. 2d is a schematic flowchart of a communication method according to an embodiment of this application. The method includes the following steps.

Step 201d: An NEF sends a QoS analytics request to an NWDAF. Correspondingly, the NWDAF receives the QoS analytics request.

The QoS analytics request includes information about a first area, and the QoS analytics request is used for requesting to obtain a providable QoS parameter corresponding to the first area. Optionally, the area may be range information, location information, or route track information.

Optionally, the QoS analytics request further includes time information, and the QoS analytics request is used for requesting to obtain a providable QoS parameter corresponding to the time information and the first area.

In an implementation method, before step 201d, an AF sends a QoS request to the NEF, where the QoS request includes the information about the first area, and the QoS request is used for requesting to obtain the providable QoS parameter corresponding to the first area. Alternatively, the QoS request includes the information about the first area and the time information, and the QoS request is used for requesting to obtain the providable QoS parameter corresponding to the time information and the first area.

Step 202d: The NWDAF obtains a sensing map corresponding to the first area.

The sensing map is state information that is of an object in the first area and that is obtained through sensing.

For example, the NWDAF sends a sensing map request to an SF, where the sensing map request includes the information about the first area. Then, the SF sends a request message to a sensing device, where the request message includes the information about the first area. The sensing device sends a response message to the SF, where the response message includes sensing measurement data corresponding to the first area. Then, the SF generates the sensing map based on the sensing measurement data, and sends a sensing map response to the NWDAF, where the sensing map response includes the sensing map.

Step 203d: The NWDAF determines the providable QoS parameter based on the sensing map.

The providable QoS parameter is a QoS parameter that can be provided in the first area.

Optionally, the NWDAF generates the providable QoS parameter based on the sensing map and the time information. In this case, the providable QoS parameter is a QoS parameter that can be provided in the first area in a time period indicated by the time information.

Step 204d: The NWDAF sends a QoS analytics response to the NEF. Correspondingly, the NEF receives the QoS analytics response.

The QoS analytics response includes the providable QoS parameter.

In an implementation method, after step 204d, the NEF sends a QoS response to the AF, where the QoS response includes the providable QoS parameter.

In the foregoing solution, information in a sensing dimension is used as a consideration factor for communication control (for example, QoS), that is, the NWDAF determines the providable QoS parameter based on the sensing map, and sends the providable QoS parameter to the AF, to implement more refined management and control on quality of service, so that communication QoS of a service can be optimized, thereby improving service experience in communication.

It should be noted that, in the embodiment in FIG. 2d, after receiving the QoS analytics request, the NWDAF obtains a corresponding sensing map, and determines the providable QoS parameter based on the sensing map. In another implementation method, the NWDAF may alternatively obtain information about a service area of the PCF in advance, and subscribe to, from the SF, a sensing map corresponding to the service area of the PCF. The NWDAF may dynamically receive a latest sensing map. Then, after subsequently receiving the QoS analytics request, the NWDAF may directly determine the providable QoS parameter based on the sensing map. In this way, efficiency of determining the providable QoS parameter can be improved.

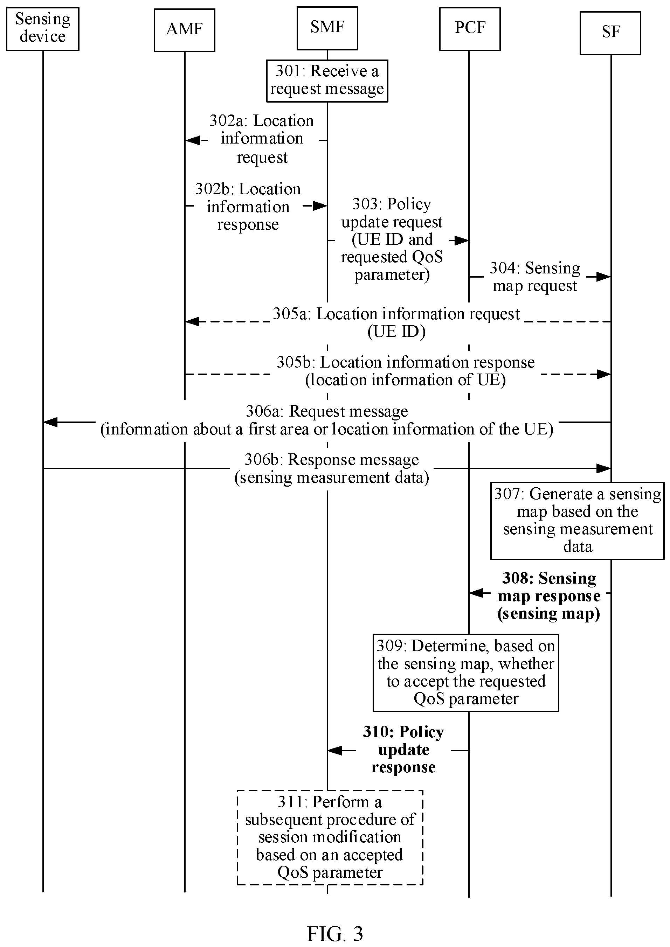

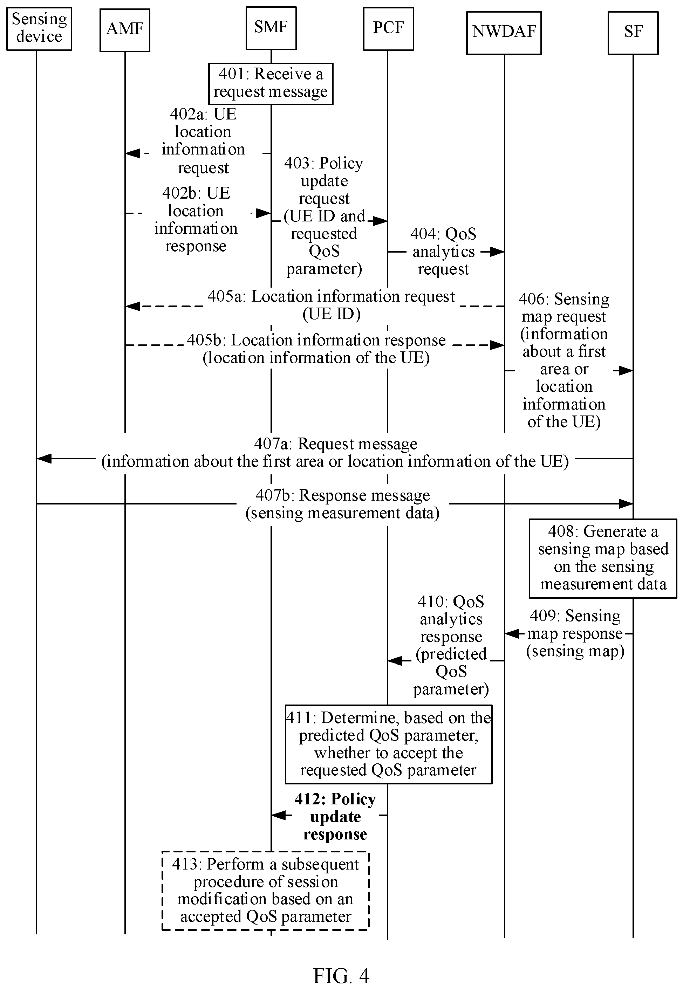

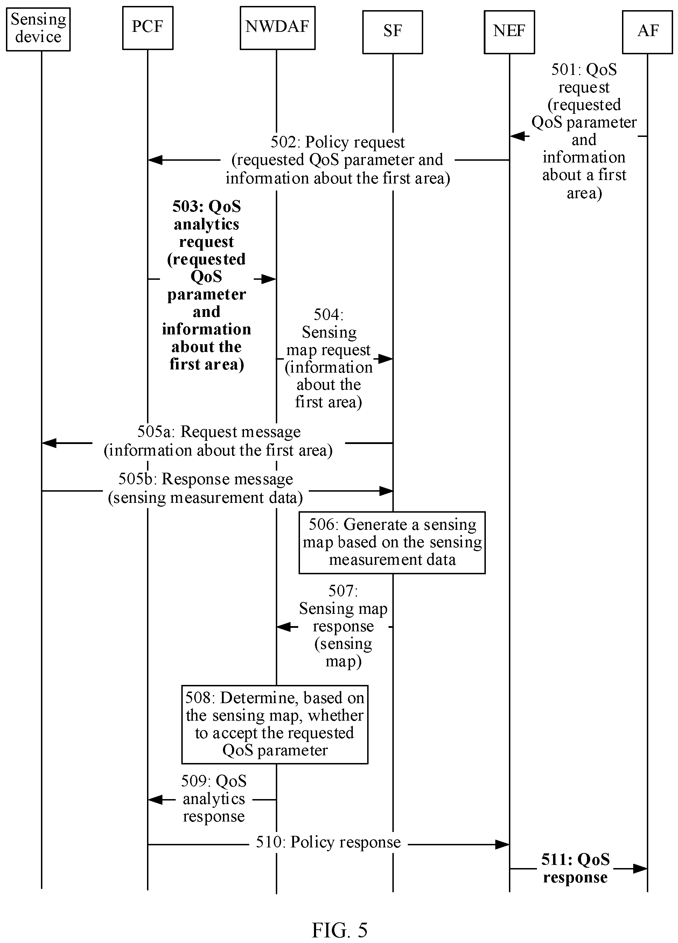

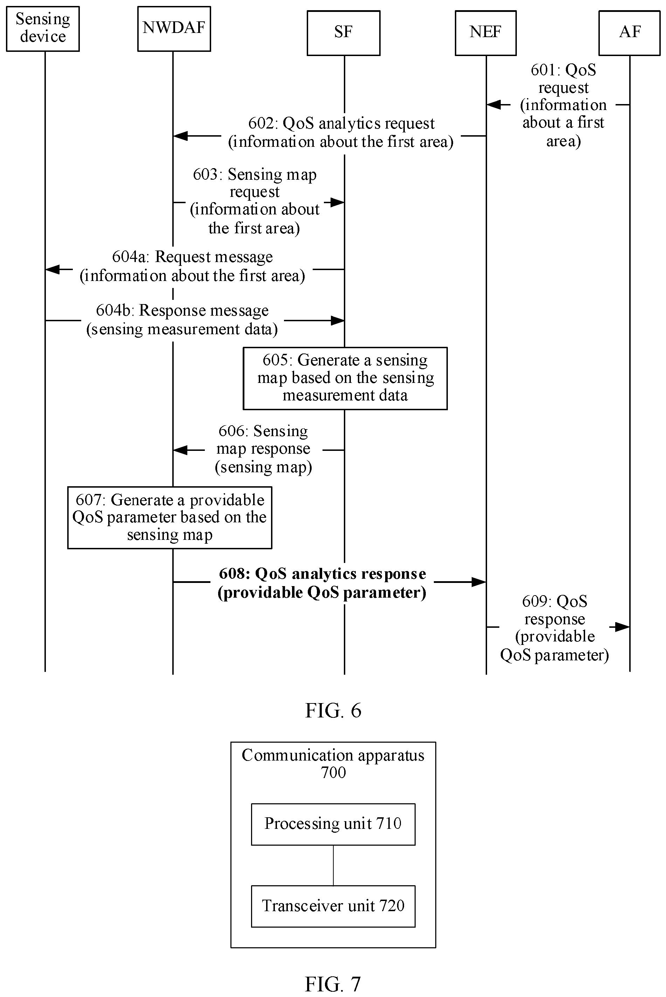

The following describes the embodiments of FIG. 2a to FIG. 2d with reference to specific embodiments of FIG. 3 to FIG. 6. The embodiment in FIG. 3 is a specific example of the embodiment in FIG. 2a, the embodiment in FIG. 4 is a specific example of the embodiment in FIG. 2b, the embodiment in FIG. 5 is a specific example of the embodiment in FIG. 2c, and the embodiment in FIG. 6 is a specific example of the embodiment in FIG. 2d.

FIG. 3 is a schematic flowchart of a communication method according to an embodiment of this application. The method includes the following steps.

Step 301: An SMF receives a request message, where the request message is used for requesting to create, modify, or delete a QoS flow.

Optionally, the request message may include packet detection information (packFiltInfo), and may further include an identifier of a policy and charging control (policy and charging control, PCC) rule (pccRuleId) and/or a QoS parameter. Optionally, the request message further includes indication information, where the indication information indicates to optimize communication through network sensing.

In an implementation method, that the SMF receives the request message specifically includes: The SMF receives a PDU_Session_Modification request from UE. The request may include packet detection information, and may further include pccRuleId and/or a QoS parameter. Additionally, the request may further include an alternative QoS profile (alternative QoS profile). The alternative QoS profile includes a plurality of QoS profiles, for example, includes a QoS profile 1, a QoS profile 2, and a QoS profile 3. Each QoS profile includes a guaranteed flow bit rate (guaranteed flow bit rate, GFBR), a packet delay budget (packet delay budget, PDB), a packet error rate (packet error rate, PER), or another parameter. The PDU_Session_Modification request is sent by an AMF to the SMF by using an Nsmf_PDUSession_UpdateSMContext request.

In still another implementation method, that the SMF receives the request message specifically includes: The SMF receives a QoS flow modification request or a QoS flow deletion request from a base station, where the request includes QoS flow identification information. The QoS flow modification request or the QoS flow deletion request is sent by an AMF to the SMF by using an Nsmf_PDUSession_UpdateSMContext request.

In still another implementation method, that the SMF receives the request message specifically includes: The SMF receives an Npcf_SMPolicyControl_UpdateNotify request from a PCF. For example, an AF sends a request message to the PCF. The request message is used for creating, modifying, or deleting a QoS flow for a service request. Optionally, the request message includes the foregoing indication information. If determining, based on the received request message, that an updated policy needs to be provided for the SMF, the PCF sends the Npcf_SMPolicyControl_UpdateNotify request to the SMF. The request includes PCC policy update information related to a PDU session, and optionally further includes the foregoing indication information.

Step 302a: The SMF sends a location information request to the AMF. Correspondingly, the AMF receives the location information request.

The location information request is used for requesting to obtain location information of the UE, and the request message includes a UE ID.

Step 302b: The AMF sends a location information response to the SMF. Correspondingly, the SMF receives the location information response.

The location information response includes the location information of the UE, and the location information of the UE may be an ID of a cell that the UE currently accesses or specific location information obtained by positioning the UE.

Step 302a and step 302b are optional steps.

Step 303: The SMF sends a policy update request to the PCF. Correspondingly, the PCF receives the policy update request.

The policy update request includes the UE ID and a requested QoS parameter. The requested QoS parameter may be provided by the UE or the AF in step 301, may be obtained through negotiation between the SMF and the UE or the AF, or may be determined and generated by the SMF based on the alternative QoS profile.

If the request message in step 301 carries the indication information, the policy update request may further carry the indication information.

If step 302a and step 302b are performed, the policy update request may further carry the location information of the UE.

The policy update request is a specific example of the first request in the embodiment in FIG. 2a.

Step 304: The PCF sends a sensing map request to an SF. Correspondingly, the SF receives the sensing map request.

If the indication information is carried in step 303, the PCF determines, based on the indication information, to send the sensing map request to the SF.

If the indication information is not carried in step 303, the PCF may autonomously determine that communication needs to be optimized through network sensing, and therefore sends the sensing map request to the SF.

If the PCF receives the location information of the UE in step 303, the PCF determines, based on the location information of the UE, information about a first area in which the UE is located. The first area may be the same as or different from the location information of the UE. This is not limited in this application. In this way, the sensing map request includes the information about the first area.

Alternatively, if the PCF receives the location information of the UE in step 303, the sensing map request includes the location information of the UE.

If the PCF does not receive the location information of the UE in step 303, the sensing map request includes the UE ID.

Alternatively, if the PCF does not receive the location information of the UE in step 303, the PCF may obtain the location information of the UE from the AMF based on the UE ID. In this case, the sensing map request includes the location information of the UE or the information about the first area determined by the PCF based on the location information of the UE.

In conclusion, the sensing map request may carry at least one of the UE ID, the location information of the UE, or the information about the first area.

Step 305a: The SF sends a location information request to the AMF. Correspondingly, the AMF receives the location information request.

The location information request includes a UE ID, and the location information request is used for requesting to obtain location information of the UE.

Step 305b: The AMF sends a location information response to the SF. Correspondingly, the SF receives the location information response.

The location information response includes the location information of the UE, and the location information of the UE may be an ID of a cell that the UE currently accesses or specific location information obtained by positioning the UE. After receiving the location information of the UE, the SF may determine, based on the location information of the UE, the information about the first area in which the UE is located.

Step 305a and step 305b are optional steps. If the sensing map request in step 304 carries the information about the first area, step 305a and step 305b do not need to be performed. If the sensing map request in step 304 carries the UE ID, step 305a and step 305b need to be performed.

Step 306a: The SF sends a request message to a sensing device. Correspondingly, the sensing device receives the request message.

The request message includes the information about the first area or the location information of the UE. The request message is used for requesting sensing measurement data corresponding to the first area.

The sensing device may be integrated inside the base station, that is, the sensing device is a functional module of the base station. Alternatively, the sensing device is an independent entity device. For example, the sensing device is an independent terminal device.

Step 306b: The sensing device sends a response message to the SF. Correspondingly, the SF receives the response message.

The response message includes the sensing measurement data corresponding to the first area. The sensing measurement data indicates environment information around the UE, for example, including one or more of a quantity of objects, an object distribution status, an object type, an object size, an object outline, a moving speed of an object, or a moving direction of the object. These objects may be static objects or may be dynamic objects.

Step 306a and step 306b are optional. Before step 301, the SF has controlled these sensing devices to perform sensing and continuously obtain sensing measurement data. Therefore, the SF may generate a required sensing map based on the sensing measurement data.

Step 307: The SF generates the sensing map based on the sensing measurement data.

Step 308: The SF sends a sensing map response to the PCF. Correspondingly, the PCF receives the sensing map response.

The sensing map response includes the sensing map.

Optionally, if the sensing map request in step 304 carries the UE ID, the sensing map response further includes the location information of the UE.

Step 309: The PCF determines, based on the sensing map, whether to accept the requested QoS parameter.

For example, the PCF may determine, based on the sensing map and the location information of the UE, whether to accept the requested QoS parameter.

For a detailed implementation solution of step 309, refer to the descriptions of step 203a in the embodiment in FIG. 2a.

Step 310: The PCF sends a policy update response to the SMF. Correspondingly, the SMF receives the policy update response.

The policy update response includes an accepted QoS parameter, or the policy update response indicates that the requested QoS parameter is rejected.

For example, the policy update response may be an Npcf_SMPolicyControl_Update response.

Step 311: The SMF performs a subsequent procedure of session modification based on the accepted QoS parameter.

Step 311 is an optional step. When the SMF receives the accepted QoS parameter, step 311 may be performed.

In the foregoing solution, information in a sensing dimension is used as a consideration factor for communication control (for example, QoS) of the UE, that is, the PCF determines, based on the sensing map, whether to accept the requested QoS parameter, so that communication QoS of a service can be optimized, thereby improving service experience in communication.

FIG. 4 is a schematic flowchart of a communication method according to an embodiment of this application. The method includes the following steps.

Step 401 is the same as step 301 in the embodiment in FIG. 3.

Step 402a and step 402b are the same as step 302a and step 302b in the embodiment in FIG. 3.

Step 403 is the same as step 303 in the embodiment in FIG. 3.

Step 404: The PCF sends a QoS analytics request to an NWDAF. Correspondingly, the NWDAF receives the QoS analytics request.

If indication information is carried in step 403, the PCF determines, based on the indication information, to send the QoS analytics request to the NWDAF. If the indication information is not carried in step 403, the PCF may autonomously determine that communication needs to be optimized through network sensing, and therefore sends the QoS analytics request to the NWDAF.

In an implementation method, if the PCF receives location information of UE in step 403, the QoS analytics request includes the location information of the UE or includes information about a first area in which the UE is located, and the information about the first area is determined by the PCF based on the location information of the UE.

In another implementation method, if the PCF does not receive the location information of the UE in step 403, the QoS analytics request includes a UE ID.

Alternatively, if the PCF does not receive the location information of the UE in step 403, the PCF may obtain the location information of the UE from the AMF based on the UE ID. In this case, the QoS analytics request includes the location information of the UE or the information about the first area determined by the PCF based on the location information of the UE.

In conclusion, the QoS analytics request may carry at least one of the UE ID, the location information of the UE, or the information about the first area.

For example, the QoS analytics request may be an Nnwdaf_AnalyticsInfo request.

Step 405a: The NWDAF sends a location information request to the AMF. Correspondingly, the AMF receives the location information request.

The location information request is used for requesting to obtain the location information of the UE, and the location information request includes the UE ID.

Step 405b: The AMF sends a location information response to the NWDAF. Correspondingly, the NWDAF receives the location information response.

The location information response includes the location information of the UE, and the location information of the UE may be an ID of a cell that the UE currently accesses or specific location information obtained by positioning the UE.

Step 405a and step 405b are optional steps. If the QoS analytics request in step 404 carries the location information of the UE or the information about the first area, step 405a and step 405b do not need to be performed. If the QoS analytics request in step 404 carries the UE ID, step 405a and step 405b need to be performed.

Step 406: The NWDAF sends a sensing map request to an SF. Correspondingly, the SF receives the sensing map request.

The sensing map request includes the information about the first area or the location information of the UE. The information about the first area may be generated by the NWDAF based on the location information of the UE or received from the PCF.

If the UE ID is carried in step 404, the NWDAF obtains the location information of the UE by performing step 405a and step 405b, and includes the location information of the UE in the sensing map request, or the NWDAF determines, based on the location information of the UE, the information about the first area in which the UE is located, and includes the information about the first area in the sensing map request.

If the location information of the UE is carried in step 404, the NWDAF includes the location information of the UE in the sensing map request, or the NWDAF determines, based on the location information of the UE, the information about the first area in which the UE is located, and includes the information about the first area in the sensing map request.

If the information about the first area is carried in step 404, the NWDAF includes the information about the first area in the sensing map request.

Step 407a: The SF sends a request message to a sensing device. Correspondingly, the sensing device receives the request message.

The request message includes the information about the first area or the location information of the UE. The request message is used for requesting sensing measurement data corresponding to the first area.

The sensing device may be integrated inside a base station, that is, the sensing device is a functional module of the base station. Alternatively, the sensing device is an independent entity device. For example, the sensing device is an independent terminal device.

Step 407b: The sensing device sends a response message to the SF. Correspondingly, the SF receives the response message.

The response message includes the sensing measurement data corresponding to the first area. The sensing measurement data indicates environment information around the UE, for example, including one or more of a quantity of objects, an object distribution status, an object type, an object size, an object outline, a moving speed of an object, or a moving direction of the object.

Step 407a and step 407b are optional. Before step 401, the SF has controlled these sensing devices to perform sensing and continuously obtain sensing measurement data. Therefore, the SF may generate a required sensing map based on the sensing measurement data.

Step 408: The SF generates the sensing map based on the sensing measurement data.

Step 409: The SF sends a sensing map response to the NWDAF. Correspondingly, the NWDAF receives the sensing map response.

The sensing map response includes the sensing map.

Step 410: The NWDAF sends a QoS analytics response to the PCF. Correspondingly, the PCF receives the QoS analytics response.

The QoS analytics response includes a predicted QoS parameter.

Because there is a static object and/or a dynamic object in the sensing map, the predicted QoS parameter determined by the NWDAF reflects a blocking status of an object at a location at a time point, so that a corresponding QoS parameter, that is, the predicted QoS parameter, can be determined.

Generally, when a location is blocked by a dynamic moving object, QoS may potentially experience temporary degradation. In this case, a QoS level corresponding to the predicted QoS parameter may be high. When a location is blocked by a static object or a large quantity of/high density of objects, QoS may potentially experience permanent degradation. In this case, a QoS level corresponding to the predicted QoS parameter may be low.

Optionally, if the QoS analytics request in step 404 carries the UE ID, the QoS analytics response further includes the location information of the UE.

For example, the QoS analytics response may be an Nnwdaf_AnalyticsInfo response message.

Step 411: The PCF determines, based on the predicted QoS parameter, whether to accept a requested QoS parameter.

For example, the PCF may determine, based on the predicted QoS parameter and the location information of the UE, whether to accept the requested QoS parameter.

For a detailed implementation solution of step 411, refer to the descriptions of step 206b in the embodiment in FIG. 2b.

Step 412 and step 413 are the same as step 310 and step 311 in the embodiment in FIG. 3.

In the foregoing solution, information in a sensing dimension is used as a consideration factor for communication control (for example, QoS) of the UE, that is, the NWDAF determines the predicted QoS parameter based on the sensing map and sends the predicted QoS parameter to the PCF, and the PCF determines, based on the predicted QoS parameter, whether to accept the requested QoS parameter, so that communication QoS of a service can be optimized, thereby improving service experience in communication.

FIG. 5 is a schematic flowchart of a communication method according to an embodiment of this application. The method includes the following steps.

Step 501: An AF sends a QoS request to an NEF. Correspondingly, the NEF receives the QoS request.

The QoS request includes a requested QoS parameter and information about a first area. Optionally, indication information is further included, where the indication information indicates to optimize communication through network sensing.

For example, the requested QoS parameter includes a QoS index (QoS Reference) or explicit QoS parameter (individual QoS parameter) content, and optionally further includes an alternative service requirement (Alternative Service Requirement) of the requested QoS parameter.

For example, the QoS request may be an Nnef_AFsessionWithQoS_Create request or an Nnef_AFsessionWithQoS_Update request.

Step 502: The NEF sends a policy request to a PCF. Correspondingly, the PCF receives the policy request.

The policy request includes the requested QoS parameter and the information about the first area.

If the QoS request includes the indication information, the policy request further includes the indication information.

For example, the policy request is an Npcf_PolicyAuthorization_Create request or an Npcf_PolicyAuthorization_Update request.

Step 503: The PCF sends a QoS analytics request to an NWDAF. Correspondingly, the NWDAF receives the QoS analytics request.

If the indication information is carried in step 502, the PCF determines, based on the indication information, to send the QoS analytics request to the NWDAF. If the indication information is not carried in step 502, the PCF may autonomously determine that communication needs to be optimized through network sensing, and therefore sends the QoS analytics request to the NWDAF.

The QoS analytics request includes the requested QoS parameter and the information about the first area.

For example, the QoS analytics request may be an Nnwdaf_AnalyticsInfo request.

Step 504: The NWDAF sends a sensing map request to an SF. Correspondingly, the SF receives the sensing map request.

The sensing map request includes the information about the first area.

Step 505a: The SF sends a request message to a sensing device. Correspondingly, the sensing device receives the request message.

The request message includes the information about the first area. The request message is used for requesting sensing measurement data corresponding to the first area.

The sensing device may be integrated inside a base station, that is, the sensing device is a functional module of the base station. Alternatively, the sensing device is an independent entity device. For example, the sensing device is an independent terminal device.

Step 505b: The sensing device sends a response message to the SF. Correspondingly, the SF receives the response message.

The response message includes the sensing measurement data corresponding to the first area. The sensing measurement data indicates environment information around the UE, for example, including one or more of a quantity of objects, an object distribution status, an object type, an object size, an object outline, a moving speed of an object, or a moving direction of the object. These objects may be static objects or may be dynamic objects.

Step 505a and step 505b are optional. Before step 501, the SF has controlled these sensing devices to perform sensing and continuously obtain sensing measurement data. Therefore, the SF may generate a required sensing map based on the sensing measurement data.

Step 506: The SF generates the sensing map based on the sensing measurement data.

Step 507: The SF sends a sensing map response to the NWDAF. Correspondingly, the NWDAF receives the sensing map response.

The sensing map response includes the sensing map.

Step 508: The NWDAF determines, based on the sensing map, whether to accept the requested QoS parameter.

For a detailed implementation solution of step 508, refer to the descriptions of step 203a in the embodiment in FIG. 2a.

Step 509: The NWDAF sends a QoS analytics response to the PCF. Correspondingly, the PCF receives the QoS analytics response.

The QoS analytics response includes an accepted QoS parameter, or the QoS analytics response indicates that the requested QoS parameter is rejected.

Step 510: The PCF sends a policy response to the NEF. Correspondingly, the NEF receives the policy response.

The policy response includes the accepted QoS parameter, or the policy response indicates that the requested QoS parameter is rejected.

For example, the policy response is a Npcf_PolicyAuthorization_Create response.

Step 511: The NEF sends a QoS response to the AF. Correspondingly, the AF receives the QoS response.

The QoS response includes the accepted QoS parameter, or the QoS response indicates that the requested QoS parameter is rejected.

For example, the QoS response may be an Nnef_AFsessionWithQoS_Create response.

In the foregoing solution, information in a sensing dimension is used as a consideration factor for communication control (for example, QoS), that is, the NWDAF determines, based on the sensing map, whether to accept a QoS parameter, to implement more refined management and control on quality of service, so that communication QoS of a service can be optimized, thereby improving service experience in communication.

FIG. 6 is a schematic flowchart of a communication method according to an embodiment of this application. The method includes the following steps.

Step 601: An AF sends a QoS request to an NEF. Correspondingly, the NEF receives the QoS request.

The QoS request includes information about a first area, and the QoS request is used for requesting to obtain a providable QoS parameter corresponding to the first area.

Optionally, the QoS request further includes time information, and the QoS request is used for requesting to obtain a providable QoS parameter corresponding to the time information and the first area.

Optionally, the QoS request further includes indication information, and the indication information indicates to optimize communication through network sensing.

For example, the QoS request may be an Nnef_AnalyticsExposure_Subscribe request.

Step 602: The NEF sends a QoS analytics request to an NWDAF. Correspondingly, the NWDAF receives the QoS analytics request.

The QoS analytics request includes the information about the first area, and optionally further includes the time information.

If the QoS request includes the indication information, the QoS analytics request further includes the indication information.

For example, the QoS analytics request is an Nnwdaf_AnalyticsInfo request.

Step 603: The NWDAF sends a sensing map request to an SF. Correspondingly, the SF receives the sensing map request.

The sensing map request includes the information about the first area.

If the indication information is carried in step 602, the NWDAF determines, based on the indication information, to send the sensing map request to the SF. If the indication information is not carried in step 602, the NWDAF may autonomously determine that communication needs to be optimized through network sensing, and therefore sends the sensing map request to the SF.

Step 604a: The SF sends a request message to a sensing device. Correspondingly, the sensing device receives the request message.

The request message includes the information about the first area. The request message is used for requesting sensing measurement data corresponding to the first area.

The sensing device may be integrated inside a base station, that is, the sensing device is a functional module of the base station. Alternatively, the sensing device is an independent entity device. For example, the sensing device is an independent terminal device.

Step 604b: The sensing device sends a response message to the SF. Correspondingly, the SF receives the response message.

The response message includes the sensing measurement data. The sensing measurement data indicates environment information around the UE, for example, including one or more of a quantity of objects, an object distribution status, an object type, an object size, an object outline, a moving speed of an object, or a moving direction of the object. These objects may be static objects or may be dynamic objects.

Step 604a and step 604b are optional. Before step 601, the SF has controlled these sensing devices to perform sensing and continuously obtain sensing measurement data. Therefore, the SF may generate a required sensing map based on the sensing measurement data.

Step 605: The SF generates the sensing map based on the sensing measurement data.

Step 606: The SF sends a sensing map response to the NWDAF. Correspondingly, the NWDAF receives the sensing map response.

The sensing map response includes the sensing map.

Step 607: The NWDAF generates the providable QoS parameter based on the sensing map.

The providable QoS parameter is a QoS parameter that can be provided in the first area.

Optionally, the NWDAF generates the providable QoS parameter based on the sensing map and the time information. In this case, the providable QoS parameter is a QoS parameter that can be provided in the first area in a time period indicated by the time information.

Step 608: The NWDAF sends a QoS analytics response to the NEF. Correspondingly, the NEF receives the QoS analytics response.

The QoS analytics response includes the providable QoS parameter.

For example, the QoS analytics response is an Nnwdaf_AnalyticsInfo response.

Step 609: The NEF sends a QoS response to the AF. Correspondingly, the AF receives the QoS response.

The QoS response includes the providable QoS parameter.

For example, the QoS response may be an Nnef_AnalyticsExposure_Subscribe response.

In the foregoing solution, information in a sensing dimension is used as a consideration factor for communication control (for example, QoS), that is, the NWDAF determines the providable QoS parameter based on the sensing map, and sends the providable QoS parameter to the AF, to implement more refined management and control on quality of service, so that communication QoS of a service can be optimized, thereby improving service experience in communication.

It may be understood that, to implement functions in the foregoing embodiments, a policy control network element or a data analytics network element includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

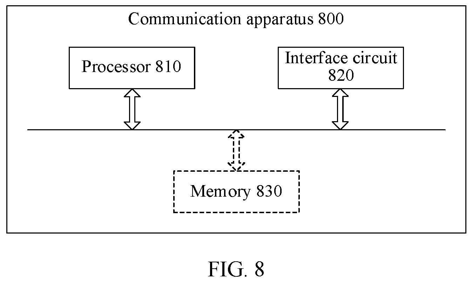

FIG. 7 and FIG. 8 are diagrams of structures of communication apparatuses according to embodiments of this application. These communication apparatuses may be configured to implement functions of the policy control network element or the data analytics network element in the foregoing method embodiments, and therefore can also implement beneficial effects of the foregoing method embodiments. In embodiments of this application, the communication apparatus may be a policy control network element or a data analytics network element, or may be a module (for example, a chip) used in the policy control network element or the data analytics network element.

The communication apparatus 700 shown in FIG. 7 includes a processing unit 710 and a transceiver unit 720. The communication apparatus 700 is configured to implement functions of the policy control network element or the data analytics network element in the foregoing method embodiments.

When the communication apparatus 700 is configured to implement functions of the PCF in the embodiment in FIG. 2a or FIG. 3, or implement functions of the NWDAF in the embodiment in FIG. 2c or FIG. 5, the transceiver unit 720 is configured to receive a first request, where the first request includes a requested QoS parameter; and the processing unit 710 is configured to: obtain a sensing map corresponding to a first area in which a terminal device is located, where the sensing map is state information that is of an object in the first area and that is obtained through sensing; and determine, based on the sensing map and the requested QoS parameter, whether to accept the requested QoS parameter.

In a possible implementation method, that the processing unit 710 is configured to determine, based on the sensing map and the requested QoS parameter, whether to accept the requested QoS parameter specifically includes: The processing unit is configured to determine, based on the sensing map and the requested QoS parameter, an accepted QoS parameter, where the accepted QoS parameter is the same as the requested QoS parameter, or a QoS level corresponding to the accepted QoS parameter is lower than a QoS level corresponding to the requested QoS parameter.

In a possible implementation method, that the processing unit 710 is configured to determine, based on the sensing map and the requested QoS parameter, whether to accept the requested QoS parameter specifically includes: The processing unit is configured to: if determining, based on the sensing map, that duration in which the requested QoS parameter cannot be met is greater than first duration, determine an accepted QoS parameter, where a QoS level corresponding to the accepted QoS parameter is lower than a QoS level corresponding to the requested QoS parameter.

In a possible implementation method, that the processing unit 710 is configured to determine, based on the sensing map and the requested QoS parameter, whether to accept the requested QoS parameter specifically includes: The processing unit is configured to: if determining, based on the sensing map, that duration in which the requested QoS parameter cannot be met is greater than first duration, reject the requested QoS parameter.

In a possible implementation method, the first request further includes indication information, and the indication information indicates to optimize communication through network sensing. That the processing unit 710 is configured to obtain the sensing map corresponding to the first area in which the terminal device is located specifically includes: The processing unit is configured to obtain, based on the indication information, the sensing map corresponding to the first area.

In a possible implementation method, the first request further includes location information of the terminal device. That the processing unit 710 is configured to obtain the sensing map corresponding to the first area in which the terminal device is located specifically includes: The processing unit is configured to: determine information about the first area based on the location information of the terminal device; send a sensing map request to a sensing network element by using the transceiver unit 720, where the sensing map request includes the information about the first area; and receive the sensing map from the sensing network element.

In a possible implementation method, the first request further includes identification information of the terminal device. That the processing unit 710 is configured to obtain the sensing map corresponding to the first area in which the terminal device is located specifically includes: The processing unit is configured to: send a sensing map request to a sensing network element by using the transceiver unit 720, where the sensing map request includes the identification information of the terminal device, and the identification information of the terminal device is used for determining information about the first area; and receive the sensing map from the sensing network element.

In a possible implementation method, that the transceiver unit 720 is configured to receive the first request specifically includes: The transceiver unit is configured to receive the first request from the policy control network element; and the transceiver unit 720 is further configured to send a first response to the policy control network element, where the first response includes an accepted QoS parameter, or the first response indicates that the requested QoS parameter is rejected.

When the communication apparatus 700 is configured to implement functions of the PCF in the embodiment in FIG. 2b or FIG. 4, the transceiver unit 720 is configured to: receive a first request, where the first request includes a requested QoS parameter; send a QoS analytics request to the data analytics network element, where the QoS analytics request includes at least one of identification information of a terminal device, location information of the terminal device, or information about a first area in which the terminal device is located; and receive a QoS analytics response from the data analytics network element, where the QoS analytics response includes a predicted QoS parameter, the predicted QoS parameter is determined based on a sensing map corresponding to the first area, and the sensing map is state information that is of an object in the first area and that is obtained through sensing; and the processing unit 710 is configured to determine, based on the predicted QoS parameter and the requested QoS parameter, whether to accept the requested QoS parameter.

In a possible implementation method, that the processing unit 710 is configured to determine, based on the predicted QoS parameter and the requested QoS parameter, whether to accept the requested QoS parameter specifically includes: The processing unit is configured to determine, based on the predicted QoS parameter and the requested QoS parameter, an accepted QoS parameter, where the accepted QoS parameter is the same as the requested QoS parameter, or a QoS level corresponding to the accepted QoS parameter is lower than a QoS level corresponding to the requested QoS parameter.

In a possible implementation method, that the processing unit 710 is configured to determine, based on the predicted QoS parameter and the requested QoS parameter, whether to accept the requested QoS parameter specifically includes: The processing unit is configured to: if determining, based on the predicted QoS parameter, that duration in which the requested QoS parameter cannot be met is greater than first duration, determine an accepted QoS parameter, where a QoS level corresponding to the accepted QoS parameter is lower than a QoS level corresponding to the requested QoS parameter.

In a possible implementation method, that the processing unit 710 is configured to determine, based on the predicted QoS parameter and the requested QoS parameter, whether to accept the requested QoS parameter specifically includes: The processing unit is configured to: if determining, based on the predicted QoS parameter, that duration in which the requested QoS parameter cannot be met is greater than first duration, reject the requested QoS parameter.

In a possible implementation method, the first request further includes indication information, and the indication information indicates to optimize communication through network sensing. That the transceiver unit 720 is configured to send the QoS analytics request to the data analytics network element specifically includes: The transceiver unit is configured to send the QoS analytics request to the data analytics network element based on the indication information.

When the communication apparatus 700 is configured to implement functions of the NWDAF in the embodiment in FIG. 2b or FIG. 4, the transceiver unit 720 is configured to receive a QoS analytics request, where the QoS analytics request includes at least one of identification information of a terminal device, location information of a terminal device, or information about a first area in which the terminal device is located; the processing unit 710 is configured to: obtain a sensing map corresponding to the first area, where the sensing map is state information that is of an object in the first area and that is obtained through sensing; and determine a predicted QoS parameter based on the sensing map; and the transceiver unit 720 is further configured to send a QoS analytics response, where the QoS analytics response includes the predicted QoS parameter, and the predicted QoS parameter is used for determining whether to accept a requested QoS parameter.

In a possible implementation method, the QoS analytics request includes the identification information of the terminal device. That the processing unit 710 is configured to obtain the sensing map corresponding to the first area specifically includes: The processing unit is configured to: send a location information request to a mobility management network element by using the transceiver unit 720, where the location information request includes the identification information of the terminal device; receive a location information response from the mobility management network element, where the location information response includes the location information of the terminal device; determine the information about the first area based on the location information of the terminal device; send a sensing map request to a sensing network element by using the transceiver unit 720, where the sensing map request includes the information about the first area; and receive the sensing map from the sensing network element.

In a possible implementation method, the QoS analytics request includes the location information of the terminal device. That the processing unit 710 is configured to obtain the sensing map corresponding to the first area specifically includes: The processing unit is configured to determine the information about the first area based on the location information of the terminal device; send a sensing map request to a sensing network element by using the transceiver unit 720, where the sensing map request includes the information about the first area; and receive the sensing map from the sensing network element.

In a possible implementation method, the QoS analytics request includes the information about the first area. That the processing unit 710 is configured to obtain the sensing map corresponding to the first area specifically includes: The processing unit is configured to: send a sensing map request to a sensing network element by using the transceiver unit 720, where the sensing map request includes the information about the first area; and receive the sensing map from the sensing network element.

In a possible implementation method, that the transceiver unit 720 is configured to receive the QoS analytics request specifically includes: The transceiver unit is configured to receive the QoS analytics request from the policy control network element. That the transceiver unit 720 is configured to send the QoS analytics response specifically includes: The transceiver unit is configured to send the QoS analytics response to the policy control network element.

When the communication apparatus 700 is configured to implement functions of the NWDAF in the embodiment in FIG. 2d or FIG. 6, the transceiver unit 720 is configured to receive a QoS analytics request, where the QoS analytics request includes information about a first area; the processing unit 710 is configured to obtain a sensing map corresponding to the first area, where the sensing map is state information that is of an object in the first area and that is obtained through sensing; and determine a providable QoS parameter based on the sensing map; and the transceiver unit 720 is further configured to send a QoS analytics response, where the QoS analytics response includes the providable QoS parameter.

In a possible implementation method, the QoS analytics request further includes time information. That the processing unit 710 is configured to determine the providable QoS parameter based on the sensing map specifically includes: The processing unit is configured to determine the providable QoS parameter based on the sensing map and the time information.

In a possible implementation method, that the processing unit 710 is configured to determine the providable QoS parameter based on the sensing map specifically includes: The processing unit is configured to determine the providable QoS parameter based on the sensing map and the information about the first area.

In a possible implementation method, that the processing unit 710 is configured to obtain the sensing map corresponding to the first area specifically includes: The processing unit is configured to: send a sensing map request to a sensing network element by using the transceiver unit 720, where the sensing map request includes the information about the first area; and receive the sensing map from the sensing network element.

In a possible implementation method, that the transceiver unit 720 is configured to receive the QoS analytics request specifically includes: The transceiver unit is configured to receive the QoS analytics request from an exposure function network element. That the transceiver unit 720 is configured to send the QoS analytics response specifically includes: The transceiver unit is configured to send the QoS analytics response to the exposure function network element.

For more detailed descriptions about the processing unit 710 and the transceiver unit 720, directly refer to related descriptions in the foregoing method embodiments. Details are not described herein again.

The communication apparatus 800 shown in FIG. 8 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions executed by the processor 810, store input data required by the processor 810 to run the instructions, or store data generated after the processor 810 runs the instructions.

When the communication apparatus 800 is configured to implement the foregoing method embodiments, the processor 810 is configured to implement functions of the foregoing processing unit 710, and the interface circuit 820 is configured to implement functions of the foregoing transceiver unit 720.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing a software instruction by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access network device, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disk; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a first request, wherein the first request comprises a requested quality of service QoS parameter;
obtaining a sensing map corresponding to a first area in which a terminal device is located, wherein the sensing map is state information that is of an object in the first area and that is obtained through sensing; and
determining, based on the sensing map and the requested QoS parameter, whether to accept the requested QoS parameter.

2. The method according to claim 1, wherein the determining, based on the sensing map and the requested QoS parameter, whether to accept the requested QoS parameter comprises:
determining an accepted QoS parameter based on the sensing map and the requested QoS parameter, wherein
the accepted QoS parameter is the same as the requested QoS parameter, or a QoS level corresponding to the accepted QoS parameter is lower than a QoS level corresponding to the requested QoS parameter.

3. The method according to claim 1, wherein the determining, based on the sensing map and the requested QoS parameter, whether to accept the requested QoS parameter comprises:
if determining, based on the sensing map, that duration in which the requested QoS parameter cannot be met is greater than first duration, determining an accepted QoS parameter, wherein a QoS level corresponding to the accepted QoS parameter is lower than a QoS level corresponding to the requested QoS parameter.

4. The method according to claim 1, wherein the determining, based on the sensing map and the requested QoS parameter, whether to accept the requested QoS parameter comprises:
if determining, based on the sensing map, that duration in which the requested QoS parameter cannot be met is greater than first duration, rejecting the requested QoS parameter.

5. The method according to claim 1, wherein the determining, based on the sensing map and the requested QoS parameter, whether to accept the requested QoS parameter comprises:
if determining, based on the sensing map, that duration in which the requested QoS parameter can be met is greater than second duration, determining an accepted QoS parameter, wherein the accepted QoS parameter is the same as the requested QoS parameter.

6. The method according to claim 1, wherein the determining, based on the sensing map and the requested QoS parameter, whether to accept the requested QoS parameter comprises:
determining a predicted QoS parameter based on the sensing map; and
determining, based on the predicted QoS parameter and the requested QoS parameter, whether to accept the requested QoS parameter.

7. The method according to claim 6, wherein the determining the predicted QoS parameter based on the sensing map comprises:
determining, based on the sensing map, a predicted QoS parameter corresponding to the first area;
determining, based on the sensing map and location information of the terminal device, a predicted QoS parameter corresponding to the terminal device; or
determining, based on the sensing map, the location information of the terminal device, and identification information of the terminal device, the predicted QoS parameter corresponding to the terminal device.

8. The method according to any one of claims 1 to 7, wherein the first request further comprises indication information, and the indication information indicates to optimize communication through network sensing; and
the obtaining the sensing map corresponding to the first area in which the terminal device is located comprises:
obtaining, based on the indication information, the sensing map corresponding to the first area.

9. The method according to any one of claims 1 to 8, wherein the first request further comprises the location information of the terminal device; and
the obtaining the sensing map corresponding to the first area in which the terminal device is located comprises:
determining information about the first area based on the location information of the terminal device;
sending a sensing map request to a sensing network element, wherein the sensing map request comprises the information about the first area; and
receiving the sensing map from the sensing network element.

10. The method according to any one of claims 1 to 8, wherein the first request further comprises the identification information of the terminal device; and
the obtaining the sensing map corresponding to the first area in which the terminal device is located comprises:
sending a sensing map request to a sensing network element, wherein the sensing map request comprises the identification information of the terminal device, and the identification information of the terminal device is used for determining information about the first area; and
receiving the sensing map from the sensing network element.

11. The method according to any one of claims 1 to 8, wherein the first request further comprises information about the first area; and
the obtaining the sensing map corresponding to the first area in which the terminal device is located comprises:
sending a sensing map request to a sensing network element, wherein the sensing map request comprises the information about the first area; and
receiving the sensing map from the sensing network element.

12. The method according to claim 1, wherein the receiving the first request comprises:
receiving the first request from a policy control network element; and
the method further comprises:
sending a first response to the policy control network element, wherein the first response comprises an accepted QoS parameter, or the first response indicates that the requested QoS parameter is rejected.

13. A communication method, wherein the method comprises:
receiving a first request, wherein the first request comprises a requested quality of service QoS parameter;
sending a QoS analytics request to a data analytics network element, wherein the QoS analytics request comprises at least one of identification information of a terminal device, location information of the terminal device, or information about a first area in which the terminal device is located;
receiving a QoS analytics response from the data analytics network element, wherein the QoS analytics response comprises a predicted QoS parameter, the predicted QoS parameter is determined based on a sensing map corresponding to the first area, and the sensing map is state information that is of an object in the first area and that is obtained through sensing; and
determining, based on the predicted QoS parameter and the requested QoS parameter, whether to accept the requested QoS parameter.

14. The method according to claim 13, wherein the determining, based on the predicted QoS parameter and the requested QoS parameter, whether to accept the requested QoS parameter comprises:
determining an accepted QoS parameter based on the predicted QoS parameter and the requested QoS parameter, wherein
the accepted QoS parameter is the same as the requested QoS parameter, or a QoS level corresponding to the accepted QoS parameter is lower than a QoS level corresponding to the requested QoS parameter.

15. The method according to claim 13, wherein the determining, based on the predicted QoS parameter and the requested QoS parameter, whether to accept the requested QoS parameter comprises:
if determining, based on the predicted QoS parameter, that duration in which the requested QoS parameter cannot be met is greater than first duration, determining an accepted QoS parameter, wherein a QoS level corresponding to the accepted QoS parameter is lower than a QoS level corresponding to the requested QoS parameter.

16. The method according to claim 13, wherein the determining, based on the predicted QoS parameter and the requested QoS parameter, whether to accept the requested QoS parameter comprises:
if determining, based on the predicted QoS parameter, that duration in which the requested QoS parameter cannot be met is greater than first duration, rejecting the requested QoS parameter.

17. The method according to claim 13, wherein the determining, based on the predicted QoS parameter and the requested QoS parameter, whether to accept the requested QoS parameter comprises:
if determining, based on the predicted QoS parameter, that duration in which the requested QoS parameter can be met is greater than second duration, determining an accepted QoS parameter, wherein the accepted QoS parameter is the same as the requested QoS parameter.

18. The method according to any one of claims 13 to 17, wherein the first request further comprises indication information, and the indication information indicates to optimize communication through network sensing; and
the sending the QoS analytics request to the data analytics network element comprises:
sending the QoS analytics request to the data analytics network element based on the indication information.

19. A communication method, wherein the method comprises:
receiving a QoS analytics request, wherein the QoS analytics request comprises at least one of identification information of a terminal device, location information of the terminal device, or information about a first area in which the terminal device is located;
obtaining a sensing map corresponding to the first area, wherein the sensing map is state information that is of an object in the first area and that is obtained through sensing;
determining a predicted QoS parameter based on the sensing map; and
sending a QoS analytics response, wherein the QoS analytics response comprises the predicted QoS parameter, and the predicted QoS parameter is used for determining whether to accept a requested QoS parameter.

20. The method according to claim 19, wherein the QoS analytics request comprises the identification information of the terminal device; and
the obtaining the sensing map corresponding to the first area comprises:
sending a location information request to a mobility management network element, wherein the location information request comprises the identification information of the terminal device;
receiving a location information response from the mobility management network element, wherein the location information response comprises the location information of the terminal device;
determining the information about the first area based on the location information of the terminal device;
sending a sensing map request to a sensing network element, wherein the sensing map request comprises the information about the first area; and
receiving the sensing map from the sensing network element.

21. The method according to claim 19, wherein the QoS analytics request comprises the location information of the terminal device; and
the obtaining the sensing map corresponding to the first area comprises:
determining the information about the first area based on the location information of the terminal device;
sending a sensing map request to a sensing network element, wherein the sensing map request comprises the information about the first area; and
receiving the sensing map from the sensing network element.

22. The method according to claim 19, wherein the QoS analytics request comprises the information about the first area; and
the obtaining the sensing map corresponding to the first area comprises:
sending a sensing map request to a sensing network element, wherein the sensing map request comprises the information about the first area; and
receiving the sensing map from the sensing network element.

23. The method according to any one of claims 19 to 22, wherein the determining the predicted QoS parameter based on the sensing map comprises:
determining, based on the sensing map, the predicted QoS parameter corresponding to the first area;
determining, based on the sensing map and the location information of the terminal device, the predicted QoS parameter corresponding to the terminal device; or
determining, based on the sensing map, the location information of the terminal device, and the identification information of the terminal device, the predicted QoS parameter corresponding to the terminal device.

24. The method according to any one of claims 19 to 23, wherein the receiving the QoS analytics request comprises:
receiving the QoS analytics request from a policy control network element; and
the sending the QoS analytics response comprises:
sending the QoS analytics response to the policy control network element.

25. A communication method, wherein the method comprises:
receiving a quality of service QoS analytics request, wherein the QoS analytics request comprises information about a first area;
obtaining a sensing map corresponding to the first area, wherein the sensing map is state information that is of an object in the first area and that is obtained through sensing;
determining a providable QoS parameter based on the sensing map; and
sending a QoS analytics response, wherein the QoS analytics response comprises the providable QoS parameter.

26. The method according to claim 25, wherein the QoS analytics request further comprises time information; and
the determining the providable QoS parameter based on the sensing map comprises:
determining the providable QoS parameter based on the sensing map and the time information.

27. The method according to claim 25, wherein the determining the providable QoS parameter based on the sensing map comprises:
determining the providable QoS parameter based on the sensing map and the information about the first area.

28. The method according to any one of claims 25 to 27, wherein the obtaining the sensing map corresponding to the first area comprises:
sending a sensing map request to a sensing network element, wherein the sensing map request comprises the information about the first area; and
receiving the sensing map from the sensing network element.

29. The method according to any one of claims 25 to 28, wherein the receiving the QoS analytics request comprises:
receiving the QoS analytics request from an exposure function network element; and
the sending the QoS analytics response comprises:
sending the QoS analytics response to the exposure function network element.

30. A communication apparatus, comprising a processor and an interface circuit, wherein the processor is configured to: communicate with another apparatus through the interface circuit, and perform the method according to any one of claims 1 to 12, perform the method according to any one of claims 13 to 18, perform the method according to any one of claims 19 to 24, or perform the method according to any one of claims 25 to 29.

31. A computer program product, wherein the computer program product comprises instructions, and when the instructions are run on a processor, the processor is caused to perform the method according to any one of claims 1 to 12, perform the method according to any one of claims 13 to 18, perform the method according to any one of claims 19 to 24, or perform the method according to any one of claims 25 to 29.

32. A computer-readable storage medium, wherein the storage medium stores a computer program or instructions, and when the computer program or instructions are executed by a communication apparatus, the method according to any one of claims 1 to 12 is implemented, the method according to any one of claims 13 to 18 is implemented, the method according to any one of claims 19 to 24 is implemented, or the method according to any one of claims 25 to 29 is implemented.

33. A communication system, comprising:
a session management network element, configured to send a first request to a policy control network element, wherein the first request comprises a requested quality of service QoS parameter; and
the policy control network element, configured to: receive the first request; obtain a sensing map corresponding to a first area in which a terminal device is located, wherein the sensing map is state information that is of an object in the first area and that is obtained through sensing; and determine, based on the sensing map and the requested QoS parameter, whether to accept the requested QoS parameter.

34. A communication system, comprising:
a policy control network element, configured to: receive a first request, wherein the first request comprises a requested quality of service QoS parameter; send a QoS analytics request to a data analytics network element, wherein the QoS analytics request comprises at least one of identification information of a terminal device, location information of the terminal device, and information about a first area in which the terminal device is located; receive a QoS analytics response from the data analytics network element, wherein the QoS analytics response comprises a predicted QoS parameter, the predicted QoS parameter is determined based on a sensing map corresponding to the first area, and the sensing map is state information that is of an object in the first area and that is obtained through sensing; and determine, based on the predicted QoS parameter and the requested QoS parameter, whether to accept the requested QoS parameter; and
the data analytics network element, configured to: receive the QoS analytics request; obtain the sensing map corresponding to the first area; determine the predicted QoS parameter based on the sensing map; and send the QoS analytics response to the policy control network element.

35. A communication system, comprising:
a policy control network element, configured to send a first request to a data analytics network element, wherein the first request comprises a requested quality of service QoS parameter; and
the data analytics network element, configured to: receive the first request; obtain a sensing map corresponding to a first area in which a terminal device is located, wherein the sensing map is state information that is of an object in the first area and that is obtained through sensing; and determine, based on the sensing map and the requested QoS parameter, whether to accept the requested QoS parameter.

36. A communication system, comprising:
an exposure function network element, configured to: send a quality of service QoS analytics request to a data analytics network element, wherein the QoS analytics request comprises information about a first area; and receive a QoS analytics response from the data analytics network element, wherein the QoS analytics response comprises a providable QoS parameter; and
the data analytics network element, configured to: receive the QoS analytics request; obtain a sensing map corresponding to the first area, wherein the sensing map is state information that is of an object in the first area and that is obtained through sensing; determine the providable QoS parameter based on the sensing map; and send the QoS analytics response to the exposure function network element.
